(19) Europäisches Patentamt
European Patent Office
Office européen des brevets

(11) **EP 3 245 727 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(21) Anmeldenummer: **16706336.1**

(22) Anmeldetag: **22.02.2016**

(51) Int Cl.:
***H02M 7/483*** (2007.01)

(86) Internationale Anmeldenummer:
**PCT/EP2016/053660**

(87) Internationale Veröffentlichungsnummer:
**WO 2016/150633 (29.09.2016 Gazette 2016/39)**

(54) **WANDLERMODUL FÜR EINEN MEHRPEGELENERGIEWANDLER**

CONVERTER MODULE FOR A MULTI-LEVEL ENERGY CONVERTER

MODULE CONVERTISSEUR POUR CONVERTISSEUR D'ÉNERGIE MULTINIVEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2015 DE 102015205267**

(43) Veröffentlichungstag der Anmeldung:
**22.11.2017 Patentblatt 2017/47**

(73) Patentinhaber: **Siemens Aktiengesellschaft 80333 München (DE)**

(72) Erfinder:
• **MONDAL, Gopal 91058 Erlangen (DE)**
• **NEUMEISTER, Matthias 90469 Nürnberg (DE)**
• **NIELEBOCK, Sebastian 91301 Forchheim (DE)**

(56) Entgegenhaltungen:
**WO-A1-2011/100738    WO-A1-2011/124260 US-A1- 2012 112 545**

• **SAHOO ASHISH KUMAR ET AL: "New 3-level submodules for a modular multilevel converter based HVDC system with advanced features", IECON 2013 - 39TH ANNUAL CONFERENCE OF THE IEEE INDUSTRIAL ELECTRONICS SOCIETY, IEEE, 10 November 2013 (2013-11-10), pages 6269-6274, XP032538812, ISSN: 1553-572X, DOI: 10.1109/IECON.2013.6700166 [retrieved on 2013-12-30]**

**Beschreibung**

Die vorliegende Erfindung betrifft ein Wandlermodul für einen Mehrpegelenergiewandler, mit zwei Wandlermodulanschlüssen, einer Schalteinheit und einem Steueranschluss zum Steuern von Schaltzuständen der Schalteinheit, wobei die Schalteinheit die zwei Wandlermodulanschlüsse des Wandlermoduls und den Steueranschluss bereitstellt. Die Erfindung betrifft ferner einen Mehrpegelenergiewandler zum Wandeln von elektrischer Energie, mit einem Anschluss zum Zuführen von zu wandelnder elektrischer Energie und einem anderen Anschluss zum Abgeben der gewandelten elektrischen Energie, wobei der Mehrpegelenergiewandler eine Wandlerschaltung aufweist, die an einen ersten der beiden Anschlüsse des Mehrpegelenergiewandlers angeschlossen ist und die mehrere in Reihe geschaltete Wandlermodule umfasst und die einen mit dem zweiten der Anschlüsse gekoppelten Mittelanschluss bereitstellt, wobei die Wandlermodule in der Wandlerschaltung zum Steuern an eine Steuereinheit angeschlossen sind, welche die Wandlermodule steuert, um die elektrische Energie zu wandeln. Darüber hinaus betrifft die Erfindung ein Verfahren zum Betreiben eines Mehrpegelenergiewandlers zum Wandeln von elektrischer Energie mittels einer Wandlerschaltung, wobei an einem Anschluss zu wandelnde elektrische Energie zugeführt und an einem anderen Anschluss die gewandelte elektrische Energie abgegeben wird, wobei die Wandlerschaltung an einem ersten der beiden der Anschlüsse des Mehrpegelenergiewandlers angeschlossen ist und mehrere in Reihe geschaltete Wandlermodule umfasst und einen mit dem zweiten der Anschlüsse gekoppelten Mittelanschluss bereitstellt, wobei die Wandlermodule der Wandlerschaltung mittels einer Steuereinheit gesteuert werden, um die elektrische Energie zu wandeln. Schließlich betrifft die Erfindung auch ein Verfahren zum Betreiben eines Mehrpegelenergiewandlers zum Wandeln von elektrischer Energie mittels einer Wandlerschaltung, wobei an einem Anschluss zu wandelnde elektrische Energie zugeführt und an einem anderen Anschluss die gewandelte elektrische Energie abgegeben wird, wobei die Wandlerschaltung an einem ersten der beiden der Anschlüsse des Mehrpegelenergiewandlers angeschlossen ist und mehrere in Reihe geschaltete Wandlermodule umfasst und einen mit dem zweiten der Anschlüsse gekoppelten Mittelanschluss bereitstellt, wobei die Wandlermodule der Wandlerschaltung jeweils einen Wandlermodulkondensator aufweisen und mittels einer Steuereinheit gesteuert werden, um die elektrische Energie zu wandeln.

Mehrpegelenergiewandler sowie Verfahren zu deren Betrieb sind dem Grunde nach bekannt, sodass es eines gesonderten druckschriftlichen Nachweises hierfür nicht bedarf. Das Gleiche gilt für Wandlermodule, die zum Aufbau von Mehrpegelenergiewandlern dienen. Mehrpegelenergiewandler sind eine spezielle Bauart von getakteten Energiewandlern. Solche Mehrpegelenergiewandler werden häufig im Bereich einer Hochspannungs-Gleichspannungsübertragung (HGÜ) eingesetzt, wobei Gleichspannungen im Bereich von mehreren 100 kV sowie Leistungen im Bereich von 1 GW vorgesehen sind. Vorzugsweise werden solche Mehrpegelenergiewandler bidirektional eingesetzt, sodass sowohl elektrische Energie von der Wechselspannungsseite zur Gleichspannungsseite als auch umgekehrt gewandelt werden kann. Üblicherweise erfolgt die Wandlung ohne wesentliche Änderung der Spannungspegel, das heißt, dass der Pegel einer maximalen Amplitude der Wechselspannung im Wesentlichen einem halben Pegel des Gleichspannungszwischenkreises entspricht.

Der Mehrpegelenergiewandler weist in der Regel eine Reihenschaltung aus einer Mehrzahl von Wandlermodulen auf, die ihrerseits einen Wandlermodulkondensator sowie hierzu parallel geschaltet eine Reihenschaltung aus zwei in Reihe geschalteten Halbleiterschaltern umfasst. Aufgrund der Schaltungsstruktur ist die Steuerung der Wandlermodule gegenüber alternativen Schaltungskonzepten vergleichsweise betriebssicher, weshalb sich der Mehrpegelenergiewandler besonders für Anwendungen im Bereich der HGÜ eignet. Darüber hinaus benötigt der Mehrpegelenergiewandler mit dem gattungsgemäßen Aufbau am Zwischenkreis keinen Zwischenkreiskondensator, der im Übrigen bei der Anwendung im Bereich HGÜ sehr aufwendig und teuer ausfallen würde. Durch die Wandlermodulkondensatoren wird eine entsprechende Stützung des Gleichspannungszwischenkreises erreicht. Gattungsgemäße Mehrpegelenergiewandler werden in der englischsprachigen Literatur auch Modular Multi Level Converter oder MMC oder auch M2C genannt.

Durch die zunehmende Preisreduktion im Bereich der elektronischen Bauelemente rücken zunehmend auch komplexe Topologien beziehungsweise Schaltungsstrukturen in den Fokus des leistungselektronischen Massenmarktes. Da die komplexen Schaltungsansätze meist für den Mittel- beziehungsweise Hochspannungsbereich entwickelt worden sind, wurden aufgrund der dort vorherrschenden Randbedingungen viele Anforderungen vergleichsweise umständlich beziehungsweise aufwändig gelöst. Bei der Übertragung solcher Topologien beziehungsweise Schaltungsstrukturen in den Niederspannungsbereich ergibt sich, dass einige Anforderungen einfacher und effizienter realisiert werden können.

Mehrpegelenergiewandler der gattungsgemäßen Art haben sich bei dem Einsatz der vorgenannten Art in der Energietechnik bewährt. Dem Grunde nach können derartige Mehrpegelenergiewandler natürlich auch bei niedrigeren Spannungen eingesetzt werden. Dadurch kann der Vorteil des sehr hohen Wirkungsgrads, der geringen Schaltverluste sowie der hohen Zuverlässigkeit im Vergleich zu anderen Energiewandlern genutzt werden.

Ein Wandlermodul für einen Mehrpegelwandler ist bekannt aus der Veröffentlichung "New 3-level Submodules for a Modular Multilevel Converter based HVDC System with Advanced Features", Sahoo A.K., Otero-De Leon R.,

Chandrasekan V. und Mohan N., 39th Annual Conference of the IEEE Industrial Electronics Society, IEEE 2013.

Es ist eine Aufgabe der Erfindung, ein Wandlermodul für einen Mehrpegelenergiewandler derart weiterzubilden, dass Schaltungsaufwand beziehungsweise Kosten reduziert werden können. Schließlich ist es eine Aufgabe der Erfindung, verbesserte Verfahren zum Betreiben eines Mehrpegelenergiewandlers anzugeben.

Als Lösung wird mit der Erfindung ein Wandlermodul gemäß den unabhängigen Ansprüchen 1 oder 2 vorgeschlagen. Darüber hinaus wird mit Anspruch 5 ein Mehrpegelenergiewandler gemäß der Erfindung vorgeschlagen. Weiterhin wird mit Anspruch 6 ein Verfahren zum Betreiben eines Mehrpegelenergiewandlers angegeben.

Wandlermodulseitig wird insbesondere vorgeschlagen, dass das Wandlermodul zwei in Reihe geschaltete Wandlermodulkondensatoren aufweist, die an die Schalteinheit angeschlossen sind, wobei jeder der Wandlermodulkondensatoren jeweils eine Wandlermodulkondensatorspannung bereitstellt, wobei die Schalteinheit eingerichtet ist, abhängig von einem jeweiligen Schaltzustand der Schalteinheit die Wandlermodulkondensatorspannung eines der Wandlermodulkondensatoren oder eine Summenspannung der in Reihe geschalteten Wandlermodulkondensatoren auf die Wandlermodulanschlüsse zu schalten.

Mehrpegelenergiewandlerseitig wird vorgeschlagen, dass der Mehrpegelenergiewandler Wandlermodule gemäß der Erfindung aufweist.

Bezüglich eines Verfahrens zum Betreiben eines Mehrpegelenergiewandlers mit erfindungsgemäßen Wandlermodulen wird insbesondere vorgeschlagen, dass die Wandlermodule gemäß dem erfindungsgemäßen Verfahren zum Betreiben von Wandlermodulen betrieben werden. Damit lässt sich auf einfache Weise erreichen, dass Wandlermodulkondensatorspannungen der Wandlermodulkondensatoren eines Wandlermoduls angleichen lassen, insbesondere in Wesentlichen gleich halten lassen. Darüber hinaus lässt sich dieses Verfahren mit einem bereits verfügbaren Verfahren zum Angleichen von elektrischen Spannungen der Wandlermodulkondensatoren unterschiedlicher Wandlermodule auf einfache Weise kombinieren, sodass mit geringem Aufwand eine Steuerung des Mehrpegelenergiewandlers erreicht werden kann.

Schließlich wird bezüglich eines Verfahrens zum Betreiben eines Mehrpegelenergiewandlers insbesondere vorgeschlagen, dass jeweils zwei benachbart miteinander verbundene Wandlermodule der Wandlerschaltung, die jeweils einen Wandlermodulkondensator aufweisen, paarweise nach dem erfindungsgemäßen Verfahren zum Betreiben von Wandlermodulen betrieben werden. Bei dieser Ausgestaltung der Erfindung können Mehrpegelenergiewandler mit dem erfindungsgemäßen Verfahren nachgerüstet werden. Zu diesem Zweck werden jeweils zwei benachbart in Reihe geschaltete Wandlermodule mit jeweils einem Wandlermodulkondensator gemeinsam gesteuert. Durch die Anwendung des erfindungsgemäßen Verfahrens zum Betreiben von Wandlermodulen, angewendet auf die jeweils gebildeten Wandlermodulpaare einer Wandlerschaltung, kann der Betrieb des Mehrpegelenergiewandlers vereinfacht und/oder beschleunigt werden.

Als Niederspannung im Sinne der Erfindung ist insbesondere eine Definition gemäß der Richtlinie 2006/95/EG des Europäischen Parlaments und des Rates vom 12. Dezember 2006 zur Angleichung der Rechtsvorschriften der Mitgliedsstaaten elektrischer Betriebsmittel zur Verwendung innerhalb bestimmter Spannungsgrenzen zu verstehen. Die Erfindung ist jedoch nicht auf diesen Spannungsbereich begrenzt, sondern kann ebenso im Bereich der Mittelspannung eingesetzt werden, die vorzugsweise einen Spannungsbereich größer als 1 kV bis einschließlich 52 kV umfassen kann. Dem Grunde nach kann die Erfindung natürlich auch im Hochspannungsbereich eingesetzt werden.

Mit dem erfindungsgemäßen Wandlermodul beziehungsweise dem erfindungsgemäßen Mehrpegelenergiewandler beziehungsweise dem erfindungsgemäßen Verfahren zum Betreiben des Wandlermoduls ist es möglich, elektrische Energie von einem Wechselspannungsanschluss zu einem Gleichspannungsanschluss oder auch umgekehrt zu fördern. Der Mehrpegelenergiewandler nimmt eine entsprechende Wandlung vor. Zu diesem Zweck ist an dem Gleichspannungszwischenkreis des Mehrpegelenergiewandlers die Wandlerschaltung mit einer Reihenschaltung angeschlossen, welche Reihenschaltung mehrere in Reihe geschaltete Wandlermodule umfasst. Natürlich können an dem Gleichspannungszwischenkreis auch zwei oder drei oder mehrere solcher Wandlerschaltungen, vorzugsweise parallel, angeschlossen sein. Mittels der Wandlerschaltung wird das Wandeln der elektrischen Energie durchgeführt.

Beispielsweise kann zwischen zwei der Wandlerschaltungen der Reihenschaltung eine weitere Reihenschaltung aus zwei Reihenschaltungsinduktivitäten zwischengeschaltet sein, deren Verbindung beziehungsweise Verbindungsanschluss den Wechselspannungsanschluss bereitstellt. Sind mehrere Wandlerschaltungen am Zwischenkreis angeschlossen, besteht darüber hinaus die Möglichkeit, dass die Wandlerschaltungen zumindest teilweise hinsichtlich des Gleichspannungsanschlusses und des Wechselspannungsanschlusses parallelgeschaltet sind. Weiterhin kann bei mehreren Wandlerschaltungen vorgesehen sein, dass phasenverschobene Wechselspannungen bereitgestellt werden können, beispielsweise um ein dreiphasiges Wechselspannungsnetz bereitzustellen.

Jedes der Wandlermodule selbst weist jeweils wenigstens eine Reihenschaltung aus zwei Halbleiterschaltern auf, zu der die in Reihe geschalteten Wandlermodulkondensatoren parallel geschaltet sind. Mittels der Halbleiterschalter können die Wandlermodulkondensatoren in vorgebbarer Weise in den Wandlungsvorgang einbezogen werden. Zu diesem Zweck sind Steuerelektroden der Halbleiterschalter an eine Wandlermodulsteuerung angeschlossen, die die Halbleiterschalter in geeigneter Weise steuert. Das grundlegende Steuerungsverfahren bezüglich des Wandelns von Energie mittels eines Mehrpegelenergiewandlers ist dem Fachmann dem Grunde nach bekannt, sodass auf eine detaillierte Darstellung des Wandlungsvorgangs vorliegend verzichtet wird. Im Übrigen wird diesbezüglich auf eine Veröffentlichung von Lesnicar, A. und Marquardt, R. verwiesen, mit dem Titel "An innovative modular multi-level converter topology for wide power range" veröffentlicht in IEEE Power Tech Conference, Bologna, Italien, Juni 2003.

Ein Halbleiterschalter im Sinne dieser Offenbarung ist vorzugsweise ein steuerbares elektronisches Schaltelement, beispielsweise ein Transistor, Kombinationsschaltungen hiervon, vorzugsweise mit parallel geschalteten Freilaufdioden, ein Gate-Turn-Off-Thyristor (GTO), ein Isolated-Gate-Bipolar-Transistor (IGBT), Kombinationen hiervon oder dergleichen. Dem Grunde nach kann der Halbleiterschalter auch durch einen Metaloxide-Semiconductor-Feldeffekttransistor (MOSFET) gebildet sein. Vorzugsweise ist der Halbleiterschalter durch die Wandlermodulsteuerung steuerbar.

Die Steuereinheit des Mehrpegelenergiewandlers ermittelt vorzugsweise die Bedingungen, die die Aktivierung beziehungsweise Deaktivierung des entsprechenden Teils der Wandlermodule bedingen. Zu diesem Zweck kann die Steuereinheit über Sensoren relevante Parameter, beispielsweise der Halbleiterschalter, der Wandlermodulkondensatoren, der Wandlerschaltung und/oder dergleichen erfassen. Parameter können beispielsweise ein elektrischer Strom, eine elektrische Spannung, eine elektrische Leistung, eine Phasenverschiebung zwischen einer elektrischen Spannung und einem zugehörigen elektrischen Strom, Kombinationen hiervon oder dergleichen sein.

Der Wandlermodulkondensator kann durch einen Folienkondensator, einen Keramikkondensator, aber auch durch einen für Frequenzanwendungen geeigneten Elektrolytkondensator oder dergleichen gebildet sein. Der Wandlermodulkondensator kann natürlich auch durch eine Kombination von mehreren Einzelkondensatoren, insbesondere unterschiedlicher Art wie zuvor genannt, gebildet sein.

Insgesamt lässt sich mit der Erfindung erreichen, dass mit einem Wandlermodul gemäß der Erfindung im Vergleich zu Wandlermodulen des Stands der Technik mehr unterschiedliche Spannungspegel mittels der Schalteinheit an den Wandlermodulanschlüssen bereitgestellt werden können. Dadurch kann insgesamt bezogen auf den Mehrpegelenergiewandler die Anzahl der Wandlermodule reduziert werden, insbesondere auch in Bezug auf den hiermit verbundenen Schaltungsaufwand. Dadurch reduziert sich die Schaltungsstruktur und es können Kosten eingespart werden.

Die Schalteinheit ist eine Baugruppe des Wandlermoduls, die Halbleiterschalter aufweist, mittels denen die Schalteinheit die gewünschten Schaltzustände realisieren kann. So kann vorgesehen sein, dass mittels der Schalteinheit die elektrische Spannung eines ausgewählten der in Reihe geschalteten Wandlermodulkondensatoren auf die Wandlermodulanschlüsse geschaltet werden kann. Es kann vorgesehen sein, dass die Schalteinheit ausgebildet ist, wahlweise die elektrische Spannung eines ausgewählten der beiden in Reihe geschalteten Wandlermodulkondensatoren auf die Wandlermodulanschlüsse zu schalten. Weiterhin ist die Schalteinheit ausgebildet, auch eine Summenspannung der in Reihe geschalteten Wandlermodulkondensatoren auf die Wandlermodulanschlüsse zu schalten. Zu diesem Zweck weist die Schalteinheit eine geeignet ausgebildete Schaltungsstruktur mit einer Mehrzahl von Halbleiterschaltern auf.

Halbleiterschalter als Schaltelemente werden im Sinne dieser Offenbarung im Schaltbetrieb betrieben. Der Schaltbetrieb eines Halbleiterschalters bedeutet, dass in einem eingeschalteten Zustand zwischen den die Schaltstrecke bildenden Anschlüssen des Halbleiterschalters ein sehr geringer elektrischer Widerstand bereitgestellt wird, sodass ein hoher Stromfluss bei sehr kleiner Restspannung möglich ist. Im ausgeschalteten Zustand ist die Schaltstrecke des Halbleiterschalters hochohmig, das heißt, sie stellt einen hohen elektrischen Widerstand bereit, sodass auch bei hoher, an der Schaltstrecke anliegender elektrischer Spannung im Wesentlichen kein oder nur ein sehr geringer, insbesondere vernachlässigbarer Stromfluss vorliegt. Hiervon unterscheidet sich ein Linearbetrieb, der aber bei Mehrpegelenergiewandlern der gattungsgemäßen Art nicht zum Einsatz kommt.

Vorzugsweise ist die Schalteinheit eingerichtet, abhängig von einem jeweiligen Schaltzustand der Schalteinheit die Polarität der auf die Wandlermodulanschlüsse geschalteten Spannung zu wechseln. Dadurch kann die Anzahl der bereitstellbaren Spannungspegel durch das Wandlermodul weiter erhöht werden. Das Wechseln kann beispielsweise durch die Schalteinheit dadurch realisiert werden, dass entsprechende Halbleiterschalter eine Umschaltfunktion bereitstellen, sodass die Polarität der von einem oder beiden Wandlermodulkondensatoren bereitgestellten elektrischen Spannung gewechselt werden kann.

Weitere Möglichkeiten der Erhöhung der Anzahl der bereitstellbaren Spannungspegel können dadurch erreicht werden, dass die Wandlermodulkondensatoren unterschiedliche elektrische Spannungen aufweisen. Mittels der Schalteinheit können diese dann in nahezu beliebiger Weise miteinander kombiniert werden.

Besonders vorteilhaft weisen die in Reihe geschalteten Wandlermodulkondensatoren jedoch in etwa die gleiche elektrische Spannung auf. Dadurch ergeben sich besonders einfache Steuerungsmöglichkeiten.

Eine Weiterbildung der Erfindung sieht vor, dass die Schalteinheit eingerichtet ist, abhängig von einem jeweiligen Schaltzustand der Schalteinheit die Wandlermodulanschlüsse elektrisch kurzzuschließen. Dadurch lässt sich der Spannungszustand Null des Wandlermoduls erreichen. In diesem Fall sind die in Reihe geschalteten Kondensatoren mehrpegelenergiewandlerseitig abgekoppelt.

Die Erfindung sieht vor, dass die Schalteinheit vier Halbleiterschalter aufweist, von denen jeweils zwei in Reihe geschaltet sind und eine Reihenschaltung bilden, wobei die beiden Reihenschaltungen parallel geschaltet sind und jeweils ein Mittelanschluss einer der Reihenschaltungen jeweils einen der Wandlermodulanschlüsse bereitstellt. Mittels dieser Ausgestaltung kann einerseits das einfache Bereitstellen der Wandlermodulanschlüsse erreicht werden und andererseits zugleich auf einfache Weise ein Wechseln der Polarität realisiert werden. Die Schaltungsstruktur entspricht im Wesentlichen der einer H-Brücke. Sie wird auch Vollbrückenschaltung genannt.

Die Erfindung sieht weiterhin vor, dass die Schalteinheit zwei weitere Halbleiterschalter aufweist, die jeweils mit einem ihrer Anschlüsse an einen Verbindungspunkt der beiden Reihenschaltungen angeschlossen sind, wobei der andere Verbindungspunkt der beiden Reihenschaltungen an die in Reihe geschalteten Wandlermodulkondensatoren angeschlossen ist, wobei der andere Anschluss eines der beiden weiteren Halbleiterschalter an einen reihenschaltungsfreien Verbindungspunkt der in Reihe geschalteten Wandlermodulkondensatoren angeschlossen ist und der andere Anschluss des anderen der beiden weiteren Halbleiterschalter an einen durch die in Reihe geschalteten Wandlermodulkondensatoren gebildeten Mittelanschluss angeschlossen ist. Diese Ausgestaltung erlaubt es, auf einfache Weise entweder nur einen der in Reihe geschalteten Wandlermodulkondensatoren mit den Wandlermodulanschlüssen zu verbinden oder die Reihenschaltung insgesamt. Auf einfache Weise kann somit eine Vielzahl von durch das Wandlermodul bereitstellbaren Spannungspegeln erzeugt werden. So ist es mit dieser Ausgestaltung möglich, ein Wandlermodul bereitzustellen, das, sofern die beiden Wandlermodulkondensatoren etwa die gleiche elektrische Spannung aufweisen, fünf Spannungspegel an den Wandlermodulanschlüssen bereitzustellen vermag. Bei einem gewöhnlichen Wandlermodul, welches auf einer H-Brückenschaltung basiert, können dagegen lediglich drei Spannungspegel an den Wandlermodulanschlüssen bereitgestellt werden. Das vorgenannte erfindungsgemäße Wandlermodul vermag deshalb zwei in Reihe geschaltete Wandlermodule des Stands der Technik bei einem Mehrpegelenergiewandler zu ersetzen. Insgesamt ergibt sich bei dieser Ausgestaltung der Vorteil, dass zwei Halbleiterschalter eingespart werden können. Das Wandlermodul der Erfindung benötigt nämlich für seine Funktion lediglich sechs Halbleiterschalter, wohingegen die beiden entsprechenden Wandlermodule des Stands der Technik jeweils vier Halbleiterschalter benötigen, in Summe also acht. Dadurch ergibt sich ein schaltungstechnischer Vorteil, der sich auch in der Reduktion des Aufwands insgesamt widerspiegelt, denn bei einem Mehrpegelenergiewandler ist in der Regel auch die Ansteuerung der Halbleiterschalter vergleichsweise aufwendig und komplex.

Die Erfindung sieht alternativ vor, dass die Schalteinheit zwei Halbleiterschalter aufweist, die in Reihe geschaltet sind und eine Reihenschaltung bilden, wobei ein Mittelanschluss der Reihenschaltung den einen der Wandlermodulanschlüsse bereitstellt und wobei ein Verbindungspunkt der Reihenschaltung mit den in Reihe geschalteten Wandlermodulkondensatoren den anderen der Wandlermodulanschlüsse bereitstellt. Diese Ausgestaltung bezieht sich auf eine Schaltungsstruktur einer Halbbrückenschaltung, bei der der Grundgedanke der Erfindung vergleichbar anwendbar ist. Hier ergibt sich zwar in Bezug auf diese konkrete Ausgestaltung keine Reduktion der Halbleiterschalter, jedoch lassen sich schaltungstechnische Vorteile für den Mehrpegelwandler insgesamt erzielen.

In dieser Alternative ist in der Erfindung bezüglich der Halbbrückenschaltung vorgesehen, dass die Schalteinheit zwei weitere Halbleiterschalter aufweist, die jeweils mit einem ihrer Anschlüsse an einen wandlermodulanschlussfreien Verbindungspunkt der Reihenschaltung angeschlossen sind und wobei der andere Anschluss eines der beiden weiteren Halbleiterschalter an einen wandlermodulanschlussfreien Verbindungspunkt der in Reihe geschalteten Wandlermodulkondensatoren angeschlossen ist und der andere Anschluss des anderen der beiden weiteren Halbleiterschalter an einen durch die in Reihe geschalteten Wandlermodulkondensatoren gebildeten Mittelanschluss angeschlossen ist. Diese Ausgestaltung realisiert die Erfindung für die Anwendung bei auf Halbbrückenschaltungen basierenden Wandlermodulen. Das Prinzip der Erfindung kann quasi in dualer Weise auf Halbbrückenschaltungen übertragen werden.

Es wird vorgeschlagen, dass in einer Wandlermodulschaltung des Mehrpegelenergiewandlers das Wandlermodul ermittelt wird, bei dem eine Spannungsdifferenz der in Reihe geschalteten Wandlermodulkondensatoren maximal oder minimal ist. Dadurch kann ermittelt werden, welches Wandlermodul bevorzugt für einen Ausgleichsvorgang zum Angleichen der elektrischen Spannungen seiner Wandlermodulkondensatoren ausgewählt wird. Maximal ist eine Spannungsdifferenz, wenn sie einen maximalen positiven Wert hat. Minimal ist eine Spannungsdifferenz, wenn sie einen minimalen negativen Wert hat. Ob die maximale oder minimale Spannungsdifferenz benutzt wird, kann davon abhängig sein, ob im folgenden bestimmungsgemäßen Betrieb der Wandlermodulkondensator aufgeladen oder entladen wird.

Ferner wird vorgeschlagen, dass bei Bereitstellen einer elektrischen Spannung durch die Wandlerschaltung, die ein Aktivieren einer ungeraden Anzahl von Wandlermodulkondensatoren von Wandlermodulen der Wandlermodulschaltung erfordert, abhängig davon, ob ein Aufladen oder Entladen der Wandlermodulkondensatoren erfolgt, das Wandlermodul mit der maximalen oder minimalen Spannungsdifferenz zum Aktivieren eines einzelnen seiner Wandlermodulkondensatoren ausgewählt wird. Die Auswahl erfolgt vorzugsweise abhängig davon, ob im folgenden bestimmungsgemäßen Betrieb mit dem Aufladen oder dem Entladen eine Reduzierung der Spannungsdifferenz erreicht werden kann.

Gemäß einer Weiterbildung wird vorgeschlagen, dass bei den anderen Wandlermodulen der Wandlerschaltung entweder beide Wandlermodulkondensatoren aktiviert werden oder keiner der Wandlermodulkondensatoren aktiviert wird. Dies ermöglicht eine einfache Steuerung der Wandlermodule mit überschaubarem Aufwand.

Darüber hinaus kann auch vorgesehen sein, dass Wandlermodule der Wandlerschaltung ermittelt werden, deren Betrag der Spannungsdifferenz einen vorgegebenen Vergleichswert überschreitet. Dadurch können gleichzeitig zwei oder mehrere Wandlermodule hinsichtlich ihrer Spannungsdifferenz in Bezug auf die Wandlermodulkondensatorspannungen optimiert werden. Diese Ausgestaltung ist vorzugsweise davon abhängig, wie groß die durch den Mehrpegelenergiewandler bereitzustellende aktuelle Spannung ist.

In diesem Zusammenhang kann es sich als vorteilhaft erweisen, wenn abhängig von der durch die Wandlerschaltung bereitzustellenden elektrischen Spannung, mehrere Wandlermodule ausgewählt werden, bei denen lediglich einer der beiden Wandlermodulkondensatoren aktiviert wird. Dadurch kann auf einfache Weise eine Angleichung der Wandlermodulkondesatorspannungen der jeweiligen Wandlermodule erreicht werden.

Gemäß einer weiteren Ausgestaltung kann vorgesehen sein, dass bei den ausgewählten Wandlermodulen jeweils der Wandlermodulkondensator aktiviert wird, sodass im folgenden bestimmungsgemäßen Betrieb des Mehrpegelenergiewandlers der Betrag der Spannungsdifferenz reduziert wird. Beispielweise kann vorgesehen sein, dass abhängig von einer Polarität der Spannungsdifferenz jeweils der zu aktivierende Wandlermodulkondensator des Wandlermoduls ausgewählt wird.

Ändert sich beispielsweise die Polarität der Spannungsdifferenz, kann vorgesehen sein, dass bei Überschreiten eines vorgegebenen Vergleichswerts durch den Betrag der Spannungsdifferenz die Wandlermodulkondensatoren des jeweiligen Wandlermoduls umgeschaltet werden. Zu diesem Zweck kann vorgesehen sein, dass der eine der Wandlermodulkondensatoren deaktiviert wird, wohingegen der andere der Wandlermodulkondensatoren aktiviert wird.

Gemäß einer Weiterbildung wird vorgeschlagen, dass wenigstens eines der Wandlermodule mit einem im Wandlermodul zirkulierenden elektrischen Strom beaufschlagt wird, der auf einer Harmonischen eines Wandlermodulstromes der zweiten Ordnung basiert. Der Wandlermodulstrom ist der elektrische Strom, der über die Wandlermodulanschlüsse strömt. Dadurch kann erreicht werden, dass das Angleichen der Wandlermodulkondensatorspannungen beschleunigt wird. Besonders vorteilhaft braucht sich dieser zirkulierende Strom nicht auf den Wandlermodulstrom auszuwirken. Er ist in diesem Fall auf das jeweilige Wandlermodul begrenzt.

Weitere Vorteile und Merkmale sind der folgenden Beschreibung von Ausführungsbeispielen anhand der Figuren zu entnehmen. In den Figuren bezeichnen gleiche Bezugszeichen gleiche Bauteile und Funktionen.

Es zeigen:

FIG 1         in einer schematischen Schaltbildansicht ein auf einer H-Brückenschaltung basierendes Wandlermodul gemäß der Erfindung,

FIG 2 bis 6       in einer schematischen Schaltbilddarstellung dargestellte Stromverläufe für fünf verschiedene Spannungspegel, die mittels der Schalteinheit auf Basis der Schaltungsstruktur gemäß FIG 1 an Wandlermodulanschlüssen bereitstellbar sind,

FIG 7         in einer schematischen Schaltbilddarstellung einen Mehrpegelenergiewandler für einen dreiphasigen Betrieb mit Wandlermodulen gemäß FIG 1,

FIG 8         in einer schematischen Blockschaltbilddarstellung einen Ausschnitt aus einer Steuereinheit zum Regeln von Kondensatorspannungen der in Reihe geschalteten Wandlermodulkondensatoren innerhalb eines Wandlermoduls und innerhalb eines solchen Wandlermoduls umfassenden Mehrpegelenergiewandlers,

FIG 9 bis 11      in schematischer Diagrammdarstellung Spannungs- und Stromverläufe an Wechselspannungsanschlüssen des Mehrpegelenergiewandlers gemäß FIG 7,

FIG 12 bis 15     in schematischen Diagrammdarstellungen Spannungsverläufe an Wandlermodulkondensatoren in einem oberen Arm einer Phase A des Mehrpegelenergiewandlers gemäß FIG 7,

FIG 16 bis 19     in schematischer Diagrammdarstellungen Spannungen an Wandlermodulkondensatoren von Wandlermodulen in einem unteren Arm der Phase A des Mehrpegelenergiewandlers gemäß FIG 7, und

FIG 20        eine schematische Übersichtsdarstellung eines Ausschnitts des Mehrpegelenergiewandlers gemäß FIG 7 mit Wandlermodulen gemäß FIG 1 und den zugeordneten Diagrammen gemäß der FIG 9 bis 19.

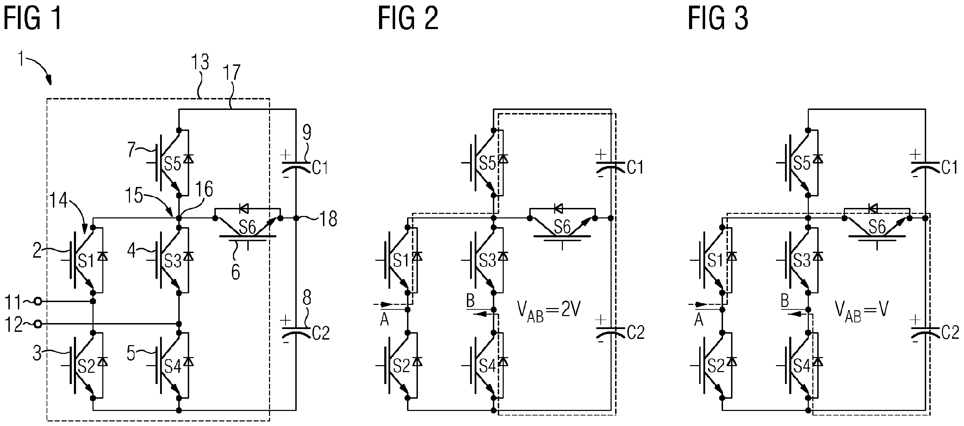

Mehrpegelenergiewandler haben sich als besonders geeignet für die Hochspannungs-Gleichstromübertragung herausgestellt. Außerhalb solcher Hochspannungsanwendungen bekommen Mehrpegelenergiewandler ebenfalls immer mehr Popularität. Mehrpegelenergiewandler, in der englischen Fachliteratur auch multi level converter (M2C, MMC) genannt, erfordern eine größere Anzahl von Einrichtungen beziehungsweise Einheiten als Wechselrichter mit einer geringeren Anzahl von Spannungspegeln. Es zeigen sich einige Vorteile bei Nutzung einer großen Anzahl von Halbleiterschaltern, jedoch erweisen sich Kosten und Baugröße nach wie vor als wichtiges Entwicklungsfeld, um Mehrpegelenergiewandler für den Mittelspannungs- und/oder Niederspannungsbereich attraktiv zu machen. Mit zunehmender Anzahl von Halbleiterschaltern steigt auch der Aufwand bezüglich ergänzender Schaltungseinrichtungen wie beispielsweise Treiberschaltungen, Ausgangsschaltsignalen und/oder dergleichen. Das Basisprinzip des Mehrpegelenergiewandlers ist es, eine hohe Anzahl von Spannungspegeln am Ausgang zu erhalten. Dies erlaubt es, einen Ausgangsstrom einer Sinusform sehr stark anzunähern und Aufwand für Ausgangsfilter zu reduzieren. Demzufolge widmet sich die Erfindung insbesondere der Aufgabe, die Anzahl der Halbleiterschalter zu reduzieren, ohne die Anzahl der verfügbaren Spannungspegel ebenfalls reduzieren zu müssen. Dies erreicht die Erfindung mit einem Wandlermodul, welches eine in FIG 1 dargestellte Schaltungsstruktur aufweist.

Dem Grunde nach kann die Schaltungsstruktur gemäß FIG 1 derart verstanden werden, dass eine bekannte Vollbrückenschaltung für ein Wandlermodul mit der Struktur einer Halbbrückenschaltung kombiniert wird. Diese Verbindung ist derart realisiert, dass das auf diese Weise gebildete Wandlermodul, welches in FIG 1 dargestellt ist, fünf Spannungspegel bereitstellen kann, was im Stand der Technik ansonsten nur durch eine Reihenschaltung von zwei Vollbrückenmodulen erreichbar ist. Dadurch kann die Anzahl der Halbleiterschalter reduziert werden, ohne gleichzeitig die Anzahl der Ausgangsspannungspegel des Mehrpegelenergiewandlers reduzieren zu müssen.

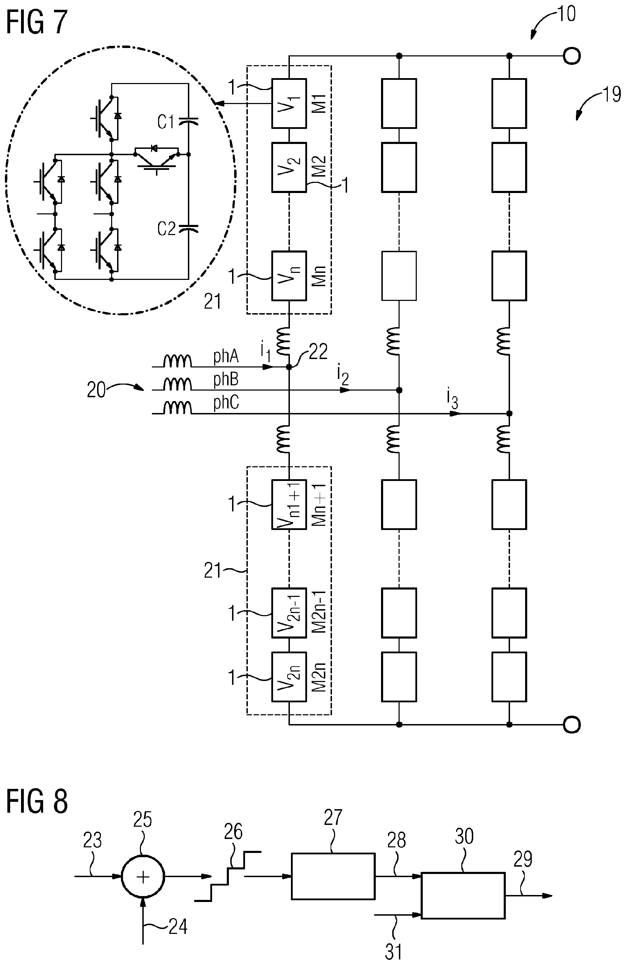

FIG 1 zeigt im Detail die Schaltungsstruktur in schematischer Ansicht eines Wandlermoduls 1 gemäß der Erfindung für einen Mehrpegelenergiewandler 10 (FIG 7). Das Wandlermodul 1 weist zwei Wandlermodulanschlüsse 11, 12 sowie eine Schalteinheit 13 auf. Nicht dargestellt ist ein Steueranschluss zum Steuern von Schaltzuständen der Schalteinheit 13 mittels einer ebenfalls nicht dargestellten Steuereinheit des Mehrpegelenergiewandlers 10. Die Schalteinheit 13 stellt die zwei Wandlermodulanschlüsse 11, 12 des Wandlermoduls 1 sowie den Steueranschluss bereit.

Das Wandlermodul 1 weist zwei in Reihe geschaltete Wandlermodulkondensatoren 8, 9 auf, die an die Schalteinheit 13 angeschlossen sind. An die Schalteinheit 13 sind sämtliche drei durch die in Reihe geschalteten Wandlermodulkondensatoren 8, 9 gebildeten Anschlüsse angeschlossen, insbesondere auch ein Mittelanschluss 18. Jeder der Wandlermodulkondensatoren 8, 9 stellt jeweils eine Wandlermodulkondensatorspannung bereit. Vorliegend sind die Wandlermodulkondensatorspannungen der Wandlermodulkondensatoren 8, 9 im Wesentlichen gleich bezüglich des Spannungswerts.

Die Schalteinheit 13 ist eingerichtet, abhängig von einem jeweiligen Schaltzustand der Schalteinheit 13 die Wandlermodulkondensatorspannung des Wandlermodulkondensators 8 oder die Summenspannung der in Reihe geschalteten Wandlermodulkondensatoren 8, 9 auf die Wandlermodulanschlüsse 11, 12 zu schalten. Dies wird im Folgenden anhand weiterer Figuren noch erläutert werden.

Zu erkennen ist aus FIG 1, dass die Halbleiterschalter 2 bis 5 in gewöhnlicher Vollbrückenschaltung verschaltet sind, das heißt, dass jeweils zwei dieser Halbleiterschalter in Reihe geschaltet sind und eine Reihenschaltung 14, 15 bilden. Die beiden Reihenschaltungen 14, 15 der Halbleiterschalter 2, 3, 4, 5 sind wiederum parallelgeschaltet. Jede der Reihenschaltungen 14, 15 stellt jeweils einen der Wandlermodulanschlüsse 11, 12 bereit. Durch diese Schaltungsstruktur ist es der Schalteinheit 13 ermöglicht, abhängig vom jeweiligen Schaltzustand der Schalteinheit 13 eine Polarität der auf die Wandlermodulanschlüsse 11, 12 geschalteten Spannung zu wechseln. Zu diesem Zweck werden entweder jeweils die Halbleiterschalter 2 und 5 oder die Halbleiterschalter 3 und 4 gemeinsam eingeschaltet. Durch Wechseln der eingeschalteten Halbleiterschalter kann die Polarität der bereitgestellten Spannung an den Wandlermodulanschlüssen 11, 12 gewechselt werden.

Aus FIG 1 ist weiterhin ersichtlich, dass die Schalteinheit 13 zwei weitere Halbleiterschalter 6 und 7 aufweist, die jeweils mit einem ihrer Anschlüsse an einen Verbindungspunkt 16 der beiden Reihenschaltungen 14, 15 angeschlossen sind. Der andere Verbindungspunkt der beiden Reihenschaltungen 14, 15 ist an die in Reihe geschalteten Wandlermodulkondensatoren 8, 9 angeschlossen. Der andere Anschluss eines der beiden weiteren Halbleiterschalter 7 ist an einen reihenschaltungsfreien Verbindungspunkt 17 der in Reihe geschalteten Wandlermodulkondensatoren 8, 9 angeschlossen. Der andere Anschluss des anderen der beiden weiteren Halbleiterschalter 6 ist an einen durch die in Reihe geschalteten Wandlermodulkondensatoren 8, 9 gebildeten Mittelanschluss 18 angeschlossen.

Durch die Halbleiterschalter 6, 7 sowie den Wandlermodulkondensator 9 unterscheidet sich das Wandlermodul 1 der Erfindung von einem gewöhnlichen Wandlermodul des Stands der Technik, welches auf einer Vollbrückenschaltung, auch H-Brückenschaltung genannt, basiert und lediglich einen einzigen Wandlermodulkondensator aufweist. Durch diese ergänzenden Elemente ist es nun möglich, dass an den Wandlermodulanschlüssen 11, 12 fünf unterschiedliche Spannungspegel bereitgestellt werden können, und zwar, wie es anhand der folgenden Tabelle 1 angegeben ist.

Tabelle 1:

|     | S1 | S2 | S3 | S4 | S5 | S6 |
|-----|----|----|----|----|----|----|
| 2V  | 1  | 0  | 0  | 1  | 1  | 0  |
| V   | 1  | 0  | 0  | 1  | 0  | 1  |
| 0   | 1  | 0  | 1  | 0  | 0  | 0  |
| -V  | 0  | 1  | 1  | 0  | 0  | 1  |

(fortgesetzt)

| | S1 | S2 | S3 | S4 | S5 | S6 |
|---|---|---|---|---|---|---|
| -2V | 0 | 1 | 1 | 0 | 1 | 0 |

In der vorliegenden Ausgestaltung ist vorgesehen, dass die Wandlermodulkondensatoren 8, 9 im Wesentlichen die gleiche elektrische Spannung aufweisen. In der Tabelle 1 ist diese Spannung mit "V" gekennzeichnet. Demzufolge ergibt sich die Summenspannung der Reihenschaltung der beiden Wandlermodulkondensatoren 8, 9 zu "2V". In der Tabelle 1 ist weiterhin folgende Zuordnung vorgesehen:

S1 entspricht Halbleiterschalter 2,
S2 entspricht Halbleiterschalter 3,
S3 entspricht Halbleiterschalter 4,
S4 entspricht Halbleiterschalter 5,
S5 entspricht Halbleiterschalter 7 und
S6 entspricht Halbleiterschalter 6.

In der Tabelle 1 bedeutet 1 ein eingeschalteter Zustand des jeweiligen Halbleiterschalters, wohingegen 0 einen ausgeschalteten Zustand des jeweiligen Halbleiterschalters kennzeichnet.

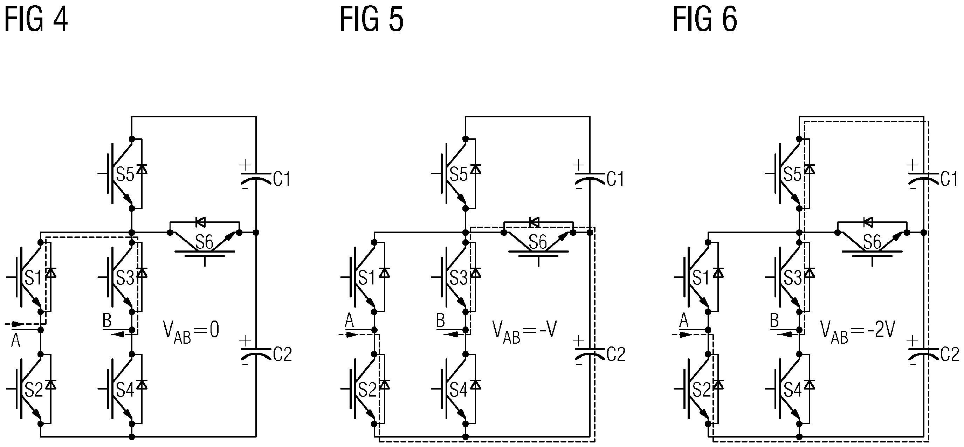

Die FIG 2 bis 5 zeigen nun entsprechend der Tabelle 1 die entsprechenden Schaltzustände basierend auf der Schaltungsstruktur gemäß FIG 1. In den FIG 2 bis 6 sind mit einem schematischen Stromzählpfeil die entsprechenden Strompfade entsprechend der jeweiligen Schaltzustände der Schalteinheit 13 dargestellt. Die Schaltungsstruktur entspricht der der FIG 1, weshalb die diesbezüglichen Ausführungen auf diese Figuren anwendbar sind.

Eine einfache Berechnung zeigt den Vorteil der Erfindung. Für einen Mehrpegelenergiewandler, der geeignet ist, 2n Spannungspegel an einem Arm erzeugen zu können, besteht aus 2n Vollbrückenmodulen beim Stand der Technik. Sind die Halbleiterschalter IGBTs, beträgt deren Anzahl in einem Arm 2n x 4 = 8n. Bei einem dreiphasigen Wechselrichter solchen Typs sind dadurch 2 x 8n x 3 = 48n Halbleiterschalter beziehungsweise IGBTs erforderlich.

Im Unterschied dazu benötigt ein Mehrpegelenergiewandler basierend auf dem Wandlermodul 1 der Erfindung lediglich n Wandlermodule in einem Arm. Daraus ergibt sich die erforderliche Anzahl von Halbleiterschaltern beziehungsweise IGBTs zu 6n. Bei einem dreiphasigen Wechselrichter sind demnach 2 x 6n x 3 = 36n Halbleiterschalter erforderlich. Mehrpegelenergiewandler mit vollbrückenbasierten Wandlermodulen haben den zusätzlichen Vorteil einer Fehlerunterdrückungseigenschaft, der Fähigkeit, als STATCOM oder dergleichen zu funktionieren, wohingegen Mehrpegelenergiewandler mit Wandlermodulen basierend auf Halbbrückenschaltungen diese zusätzlichen Merkmale nicht realisieren. Ein Grund, weshalb Mehrpegelenergiewandler mit Wandlermodulen basierend auf Vollbrückenschaltungen diese zusätzlichen Eigenschaften realisieren, ist, dass diese Wandlermodule negative Spannungspegel erzeugen können. Das in FIG 1 dargestellte Wandlermodul 1 stellt solche zusätzlichen Funktionalitäten bereit.

Anzumerken ist, dass die Halbleiterschalter 2 bis 5 eine Spannungsfestigkeit aufweisen müssen, die der Summenspannung der in Reihe geschalteten Wandlermodulkondensatoren 8, 9 entspricht. Bei den Halbleiterschaltern 6, 7 ist lediglich eine Spannungsfestigkeit in Bezug auf die einfache Wandlermodulkondensatorspannung erforderlich.

Das Wandlermodul 1 wird vorteilhaft in einem Differenzsteuerungsverfahren in einem Mehrpegelenergiewandler wie dem Mehrpegelenergiewandler 10 gemäß FIG 7 betrieben. Vorzugsweise wird eine besondere Aufmerksamkeit darauf gerichtet, die Wandlermodulkondensatorspannungen im Wesentlichen gleich zu halten. In den in FIG 2 und 3 dargestellten Schaltzuständen der Schalteinheit 13 fließt der Armstrom des Mehrpegelenergiewandlers 10 durch den Wandlermodulkondensator 8. In FIG 2 fließt der Armstrom jedoch auch durch den Wandlermodulkondensator 9. Ohne besondere Maßnahmen endet dieser Betrieb deshalb in einer Spannungsdifferenz. Aus diesem Grund erhält eine Steuereinheit vorzugsweise Informationen über sämtliche Modulspannungen des Wandlermoduls 1, und insbesondere auch Informationen über eine Spannungsdifferenz zwischen den beiden Wandlermodulkondensatoren 8, 9. Im Folgenden wird eine Möglichkeit zum Ausgleich der Wandlermodulkondensatorspannungen angegeben.

Der Armstrom passiert den Wandlermodulkondensator 8 oder 9, wenn das Wandlermodul 1 bezüglich der Spannungserzeugung in dem Mehrpegelenergiewandler 10 aktiv ist. Abhängig von der Richtung des Stroms durch den Wandlermodulkondensator 8, 9 wird er aufgeladen oder entladen. Die Menge des Aufladens beziehungsweise Entladens ist für alle beteiligten Kondensatoren gleich, durch welche der Armstrom fließt.

Die durch den Armstrom erzeugte elektrische Spannung an einem Wandlermodulkondensator ist:

$$v = \frac{1}{c} \int i\, dt \ ,$$

wobei i der Armstrom ist.

Die Steuereinheit kann dadurch sicherstellen, dass die mittlere Anzahl von Aufladungs- und Entladungszyklen für beide Wandlermodulkondensatoren in einem Arm gleich sind. Die Ausgangsgleichspannung $V_{DC}$ beziehungsweise $V_{narm\_avg}$ kann bei dem Mehrpegelenergiewandler 10 gemäß FIG 7 mit einer Anzahl von n von Wandlermodulen 1 in einem Arm wie folgt beschrieben werden:

$$V_{DC} = V_1 + V_2 + \dots + V_n = V_{n+1} + \dots + V_{2n-1} + V_{2n} = V_{narm\_avg},$$

wobei $V_1$, $V_2$, ...., $V_{2n}$ Modulspannungen der Wandlermodule 1 sind.

Die Modulspannung $V_1$ ist die Summe zweier Modulkondensatorspannungen $V_{C1}$ und $V_{C2}$. Es gilt also die Gleichung:

$$V_1 = V_{C1} + V_{C2}.$$

Die Aufgabe der Steuereinheit ist es zu erreichen, dass

$$V_1 = V_2 = \dots = V_n = V_{n+1} + \dots + V_{2n-1} + V_{2n},$$

das heißt, die Spannungen innerhalb eines Wandlermoduls 1 gleich zu halten und auch die Spannung $V = V_{C1} = V_{C2}$ zu halten, das heißt, die Wandlermodulkondensatorspannungen innerhalb eines Wandlermoduls 1 gleich zu halten.

Vorzugsweise detektiert der Mehrpegelenergiewandler 10 die Wandlermodulspannungen und wählt die Wandlermodule 1 abhängig der aktuellen Modulspannungen aus. Im vorliegenden Fall ist die Modulspannung die Summe der beiden Wandlermodulkondensatorspannungen der Wandlermodulkondensatoren 8, 9 (C1 und C2). Das Detektieren der Summenspannung stellt jedoch noch nicht sicher, dass sie auch gleich sind. In diesem Fall wird deshalb der Steuereinheit ergänzend wie folgt übermittelt:

$$(V_{C1} + V_{C2}) + V_{C2} = V_{C1} + 2V_{C2}.$$

Die Steuereinheit erhält den Befehl, einen Spannungspegel von 0 zu "n"-Pegel zu erzeugen. Die Steuereinheit hat mehrere Möglichkeiten für die Auszahl der Wandlermodule 1 während des Niedrigpegels. Um den Spannungspegel "n" zu erzeugen, hat die Steuereinheit keine Auswahl, weil die Wandlermodule 1 den Spannungspegel 2V erzeugen sollten. Um den Spannungspegel "n-1" zu erzeugen, hat die Steuereinheit die Auswahl, ein Modul den Spannungspegel V erzeugen zu lassen und den Rest der Wandlermodule den Spannungspegel 2V. Die Steuereinheit hat die Information $V_{C1} + 2V_{C2}$ für alle der Wandlermodule 1. Das Wandlermodul, das den Spannungspegel V bereitstellt, hat die Möglichkeit, den Wandlermodulkondensator 8 (C2) zu laden oder zu entladen. Wenn deshalb eine Stromrichtung zum Aufladen vorliegt, wird vorzugsweise das Wandlermodul 1 mit der größten Spannungsdifferenz ($V_{C1} - V_{C2}$) ausgewählt, um den Spannungspegel V bereitzustellen. Wenn die Stromrichtung zum Entladen vorliegt, wird das Wandlermodul 1 mit der größten Spannungsdifferenz ($V_{C2} - V_{C1}$) ausgewählt, um den Spannungspegel V bereitzustellen. Nun hat das Wandlermodul mit der größten Spannungsdifferenz ($V_{C1} - V_{C2}$) den niedrigsten Wert von $V_{C1} + 2V_{C2}$, wobei angenommen ist, dass $V_{C1} + V_{C2}$ für alle Wandlermodule 1 konstant ist. Ergänzend hat das Wandlermodul 1 mit der größten Differenz ($V_{C2} - V_{C1}$) den größten Wert von $V_{C1} + 2V_{C2}$, wobei angenommen ist, dass $V_{C1} + V_{C2}$ konstant für alle Wandlermodule 1 ist.

Dies wird wie folgt mathematisch gezeigt:

$$V_{C1} + V_{C2} = M, \hspace{4cm} \text{Gleichung (1)}$$

wobei "M" gleich 2V und konstant für alle Wandlermodule 1 ist.

Für den Fall des größten positiven Werts von ($V_{C2} - V_{C1}$) wird angenommen

$$V_{C2} - V_{C1} = k, \hspace{4cm} \text{Gleichung (2)}$$

wobei "k" eine variable Anzahl für alle Wandlermodule 1 ist und von 0 bis 2V variieren kann. Durch Addition dieser beiden Gleichungen kann der Wert von $V_{C2}$ durch M und k ausgedrückt werden:

$$V_{C2} = \frac{1}{2}(M + k). \qquad \text{Gleichung (3)}$$

Die Eingabe vom Wandlermodul 1 zur Steuereinheit ist:

$$V_{C1} + 2V_{C2} = (V_{C1} + V_{C2}) + V_{C2}. \qquad \text{Gleichung (4)}$$

Unter Berücksichtigung von Gleichung (1) erhält man:

$$(V_{C1} + V_{C2}) + V_{C2} = M + V_{C2}. \qquad \text{Gleichung (5)}$$

Durch Ersetzen von $V_{C2}$ mittels Gleichung (3) in Gleichung (5) erhält man die individuelle Wandlermodulinformation:

$$V_{C1} + 2V_{C2} = \frac{3}{2}M + \frac{1}{2}K.$$

Deshalb hat das Wandlermodul 1 mit dem größten k den höchsten Wert von $(V_{C1} + 2V_{C2})$ in dem Arm des Mehrpegelenergiewandlers 10. Das Wandlermodul 1 mit dem größten Wert für $(V_{C2} - V_{C1})$ sollte den Wandlermodulkondensator 8 entladen, sodass das Wandlermodul 1 mit dem größten Wert für $(V_{C1} + 2V_{C2})$ in dem Arm ausgewählt wird, um den Spannungspegel V während des Entladens aufgrund des Armstromes bereitzustellen. In vergleichbarer Weise stellt sich die Situation dar, wenn der Armstrom zum Aufladen dient, wobei das Wandlermodul 1 mit dem niedrigsten Wert von $(V_{C1} + 2V_{C2})$ in dem Arm ausgewählt wird, um den Spannungspegel V bereitzustellen.

Um die Geschwindigkeit der Wandlermodulkondensatorspannungsangleichung zu erhöhen, wird eine Harmonische zweiter Ordnung als zirkulierender Strom innerhalb des Wandlermoduls 1 ausgelöst. Diese zweite Harmonische ist am Ausgang des Mehrpegelenergiewandlers 10 nicht sichtbar, hilft aber dem Mehrpegelenergiewandler, die Wandlermodulkondensatoren 8, 9 der Wandlermodule 1 hinsichtlich ihrer Wandlermodulkondensatorspannungen durch Erhöhen der Auflade-/Entladezyklen schneller zu balancieren.

FIG 8 zeigt in einer schematischen Blockschaltbilddarstellung einen Programmablauf für die Steuereinheit zur Durchführung des vorbeschriebenen Verfahrens. Der Verfahrensablauf sieht einen Addierer 25 vor, dem eine Modulationsreferenz 23 zugeführt wird. Zugleich wird dem Addierer 25 eine zweite Harmonische 24 zugeführt. Daraus erzeugt der Addierer 25 ein Pegelsteuersignal 26, welches einem Sortierer 27 zugeführt wird. Der Sortierer 27 sortiert die Wandlermodule 1 hinsichtlich der Wandlermodulkondensatorspannungen wie folgt:

Wandlermodulkondensatorspannungen für das erste Wandlermodul 1: $(C_1 + 2{*}C_2)^1$,

Wandlermodulkondensatorspannungen für das zweite Wandlermodul 1: $(C_1 + 2{*}C_2)^2$,

Wandlermodulkondensatorspannungen für das n-te Wandlermodul 1: $(C_1 + 2{*}C_2)^n$.

Der Sortierer 27 liefert eine Modulreihenfolge 28 an einen Rechner 30, dem zugleich auch ein aktueller Wert des Armstroms 31 zugeführt wird. Der Rechner 30 führt den im Folgenden schematisch angegebenen Programmabschnitt aus:
Bei einer Stufe n wird keine Auswahl getroffen, da hier alle Wandlermodule 1 einen Spannungspegel von 2V bereitstellen.

Bei einer Stufe (n-1) wird mit einem der Wandlermodule 1 ein Spannungspegel von V und mit den übrigen Wandlermodulen 1 ein Spannungspegel von 2V bereitgestellt. Wenn der Armstrom 31 die Wandlermodule 1 auflädt, weist das Wandlermodul 1 mit der geringsten Ladung eine Ladung $\leq$ V und die übrigen Wandlermodule 1 weisen eine Ladung $\leq$ 2V auf. Wenn der Armstrom 31 die Wandlermodule 31 entlädt, weist das Wandlermodul 1 mit der höchsten Ladung eine Ladung $\leq$ V und die übrigen Wandlermodule 1 eine Ladung $\leq$ V auf.

Bei einer Stufe (n-2) weist eines der Wandlermodule 1 einen Spannungspegel von 0 auf und die übrigen Wandlermodule 1 einen Spannungspegel von 2V auf. Wenn der Armstrom 31 die Wandlermodule 1 auflädt, weist das Wandlermodul 1 mit der niedrigsten Ladung einen Spannungspegel ≤ 0 und die übrigen Wandlermodule 1 eine Spannungspegel ≤ 2V auf. Wenn der Armstrom 31 die Wandlermodule 1 entlädt, weist das Wandlermodul 1 mit der höchsten Ladung einen Spannungspegel ≤ 0 und die übrigen Wandlermodule 1 einen Spannungspegel ≤ V auf.

Der Programmabschnitt wird entsprechend für die weiteren Stufen fortgesetzt.

Als Ergebnis liefert der Rechner 30 ein Modulselektionssignal 29, mittels dem das entsprechende Wandlermodul 1 ausgewählt wird.

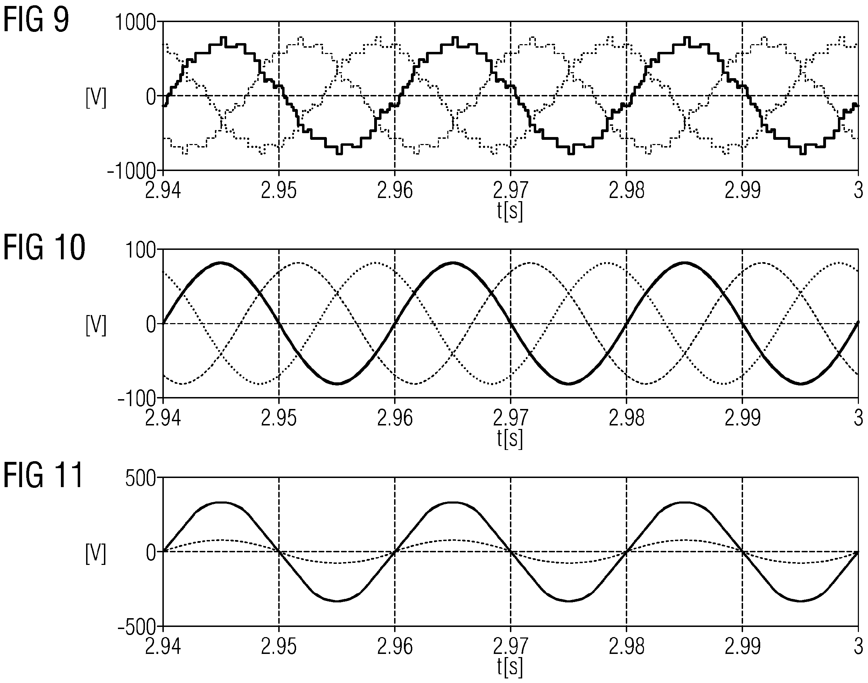

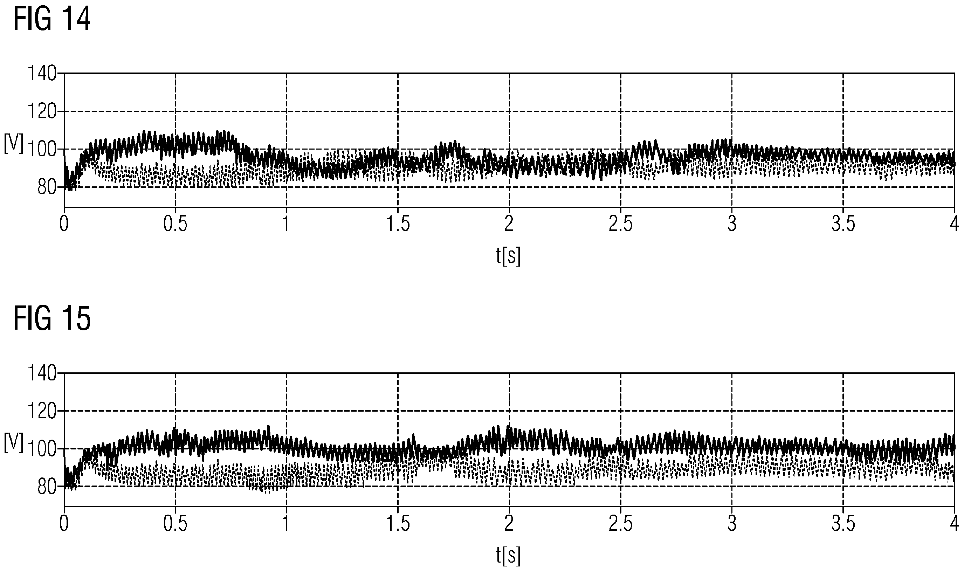

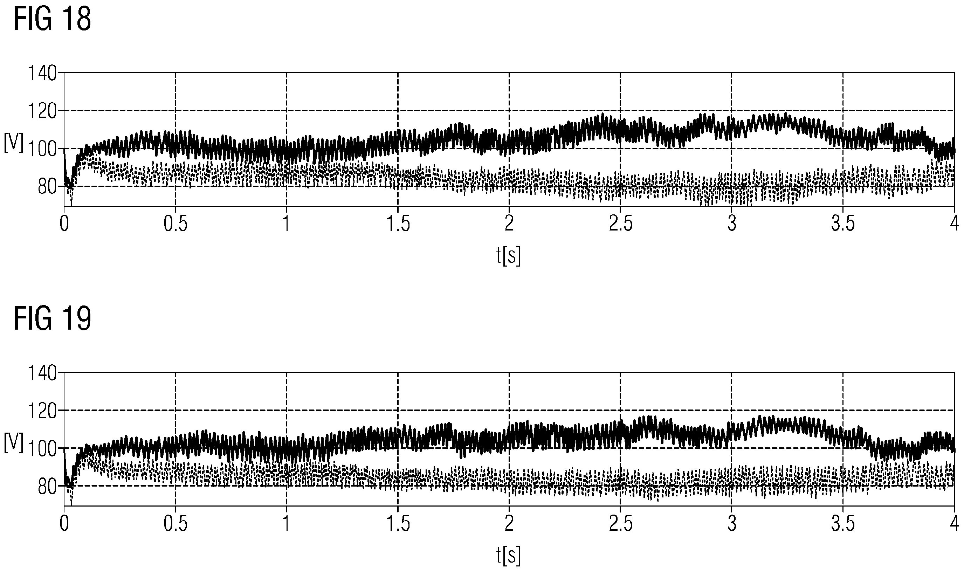

Die folgenden Ausführungen beziehen sich auf eine Simulation, die die Funktionsweise der Erfindung anhand der FIG 9 bis 20 darstellt. Die Erfindung wurde mittels SIMULINK verifiziert. Zugrunde liegt ein Mehrpegelenergiewandler 10, wie er anhand von FIG 7 bereits erläutert worden ist, der Wandlerschaltungen 21 mit jeweils vier Wandlermodulen 1 gemäß FIG 1 umfasst. Durch jede der Wandlerschaltungen 21 strömt ein Armstrom. Diesbezüglich wird auf die entsprechenden obigen Ausführungen verwiesen. Jedes der Wandlermodule 1 kann einen maximalen Spannungspegel von 2V erzeugen. Daraus ergibt sich ein maximaler armbezogener Spannungspegel von 8V. Dabei ist zu beachten, dass jeweils zwei in Reihe geschaltete Wandlerschaltungen 21 einen Arm bilden, durch den der Armstrom fließt. In der folgenden Tabelle 2 sind die Wandlermodulspannungen für jeden Armspannungspegel dargestellt:

Tabelle 2:

| Armspannungsstufe | Wandlermodul 1 | Wandlermodul 2 | Wandlermodul 3 | Wandlermodul 4 |
|---|---|---|---|---|
| 8 | 2V | 2V | 2V | 2V |
| 7 | 2V | 2V | 2V | V |
| 6 | 2V | 2V | 2V | 0 |
| 5 | 2V | 2V | V | 0 |
| 4 | 2V | 2V | 0 | 0 |
| 3 | 2V | V | 0 | 0 |
| 2 | 2V | 0 | 0 | 0 |
| 1 | V | 0 | 0 | 0 |
| 0 | 0 | 0 | 0 | 0 |

Die folgenden Simulationsparameter wurden zugrundegelegt:

Tabelle 3:

| | |
|---|---|
| Induktivität | 10 mH |
| Wandlermodulkapazität | 7.5 mF |
| Arminduktivität | 50 µH |
| DC-Spannung | 750 Volt |
| Durchschnittliche Kondensatorspannung | 93.75 Volt |
| Gesamtmodulspannung | 187.5 Volt |
| AC-Frequenz | 50 Hz |
| AC-Spannung | 230 Volt |
| Last | 56.25 kW |

In den FIG 9 bis 11 sind die Simulationsergebnisse dargestellt. Die schematischen Diagramme der FIG 9 bis 11 haben alle die gleiche Zeitbasis als Abszisse, und zwar in der Zeiteinteilung Sekunden. In FIG 9 ist die Ordinate der Wechselrichterspannung in Volt zugeordnet. In FIG 10 ist die Ordinate dem Wechselrichterstrom in Ampere zugeordnet, wohingegen in FIG 11 gemeinsam Spannung und Strom einer Wechselrichterphase dargestellt sind. Erkennbar ist aus FIG 11, dass die Phasenverschiebung etwa 0 beträgt. In FIG 9 sind die drei Phasenspannungen des Wechselrichters untereinander dargestellt, in FIG 10 die entsprechenden Phasenströme des Wechselrichters.

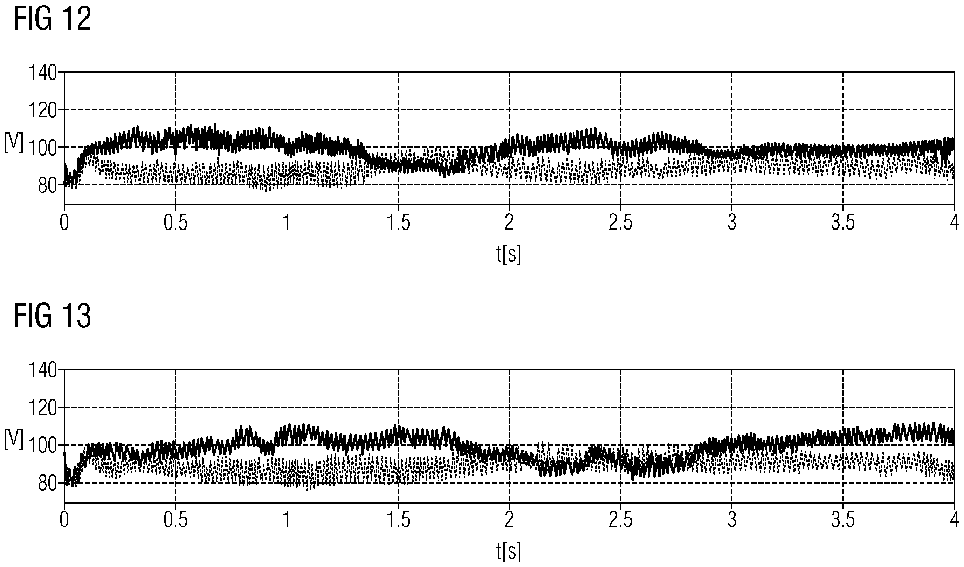

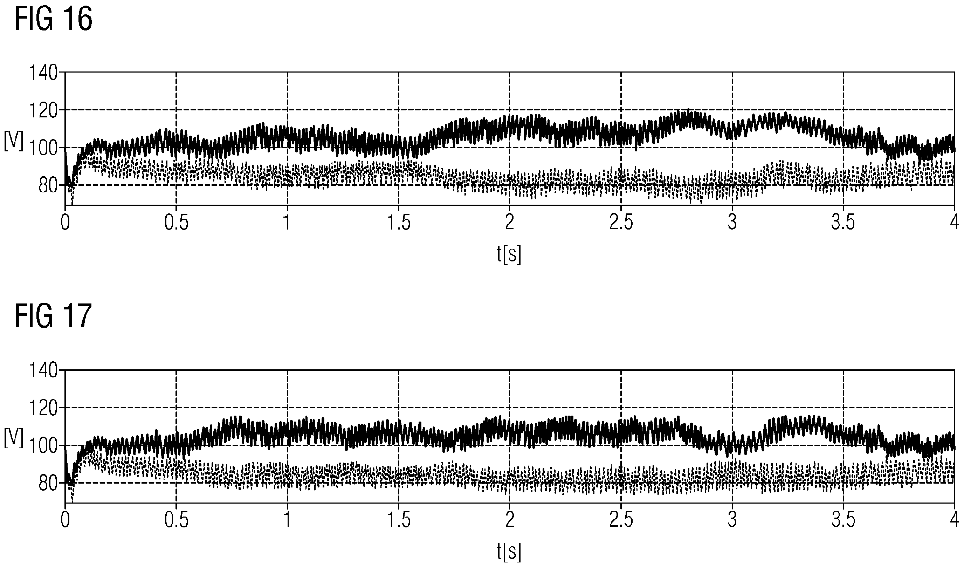

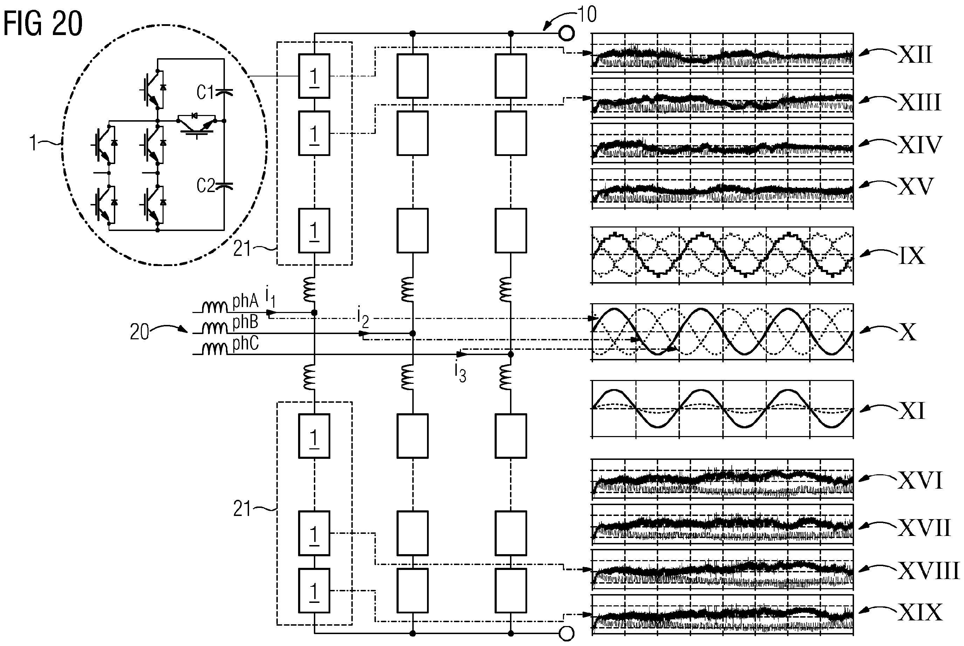

In den FIG 12 bis 14 sind schematisch Diagramme dargestellt, die die gleiche Zeitbasis in Sekunden als Abszisse haben. Die Ordinate ist der Spannung in Volt zugeordnet. Die dargestellten Spannungen in den FIG 12 bis 15 entsprechen den jeweiligen Wandlermodulkondensatorspannungen, wie sie in den entsprechenden Wandlermodulen 1 der FIG 7, und zwar in der oberen Wandlerschaltung 21 des entsprechenden Arms, auftreten. Die FIG 16 bis 19 zeigen die Wandlermodulkondensatorspannungen der Wandlermodule 1 der unteren Wandlerschaltung 21 gemäß FIG 7. FIG 20 zeigt noch einmal eine überlagerte Darstellung der FIG 1, 7 sowie 9 bis 19, um den Sachverhalt weiter zu verdeutlichen.

Die Ausführungsbeispiele dienen lediglich der Erläuterung der Erfindung und sind für diese nicht beschränkend. Natürlich können Funktionen, insbesondere auch Ausgestaltungen, in Bezug auf den Mehrpegelenergiewandler sowie die Wandlermodule beliebig gestaltet sein, ohne den Gedanken der Erfindung zu verlassen.

Schließlich ist anzumerken, dass die für die erfindungsgemäße Vorrichtung beschriebenen Vorteile und Merkmale sowie Ausführungsformen gleichermaßen auch auf ein entsprechendes Verfahren anwendbar sind. Folglich können für Vorrichtungsmerkmale entsprechende Verfahrensmerkmale oder auch umgekehrt vorgesehen sein.

## Patentansprüche

1. Wandlermodul (1) für einen Mehrpegelenergiewandler (10), mit zwei Wandlermodulanschlüssen (11, 12), einer Schalteinheit (13) und einem Steueranschluss zum Steuern von Schaltzuständen der Schalteinheit (13), wobei die Schalteinheit (13) die zwei Wandlermodulanschlüsse (11, 12) des Wandlermoduls (1) und den Steueranschluss bereitstellt, umfassend zwei in Reihe geschaltete Wandlermodulkondensatoren (8, 9), die an die Schalteinheit (13) angeschlossen sind, wobei jeder der Wandlermodulkondensatoren (8, 9) jeweils eine Wandlermodulkondensatorspannung bereitstellt, wobei die Schalteinheit (13) eingerichtet ist, abhängig von einem jeweiligen Schaltzustand der Schalteinheit (13) die Wandlermodulkondensatorspannung eines der Wandlermodulkondensatoren (8, 9) oder eine Summenspannung der in Reihe geschalteten Wandlermodulkondensatoren (8, 9) auf die Wandlermodulanschlüsse (11, 12) zu schalten,
wobei die Schalteinheit (13) vier Halbleiterschalter (2, 3, 4, 5) aufweist, von denen jeweils zwei in Reihe geschaltet sind und eine Reihenschaltung (14, 15) bilden, wobei die beiden Reihenschaltungen (14, 15) parallel geschaltet sind und jeweils ein Mittelanschluss einer der Reihenschaltungen (14, 15) jeweils einen der Wandlermodulanschlüsse (11, 12) bereitstellt,
**dadurch gekennzeichnet, dass** die Schalteinheit (13) zwei weitere Halbleiterschalter (6, 7) aufweist, die jeweils mit einem ihrer Anschlüsse an einem Verbindungspunkt (16) der beiden Reihenschaltungen (14, 15) angeschlossen sind, wobei der andere Verbindungspunkt der beiden Reihenschaltungen (14, 15) an ein Ende der in Reihe geschalteten Wandlermodulkondensatoren (8, 9) angeschlossen ist, wobei der andere Anschluss eines der beiden weiteren Halbleiterschalter (7) an das andere Ende (17) der in Reihe geschalteten Wandlermodulkondensatoren (8, 9) angeschlossen ist und der andere Anschluss des anderen der beiden weiteren Halbleiterschalter (6) an einen durch die in Reihe geschalteten Wandlermodulkondensatoren (8, 9) gebildeten Mittelanschluss (18) angeschlossen ist.

2. Wandlermodul (1) für einen Mehrpegelenergiewandler (10), mit zwei Wandlermodulanschlüssen (11, 12), einer Schalteinheit (13) und einem Steueranschluss zum Steuern von Schaltzuständen der Schalteinheit (13), wobei die Schalteinheit (13) die zwei Wandlermodulanschlüsse (11, 12) des Wandlermoduls (1) und den Steueranschluss bereitstellt, umfassend zwei in Reihe geschaltete Wandlermodulkondensatoren (8, 9), die an die Schalteinheit (13) angeschlossen sind, wobei jeder der Wandlermodulkondensatoren (8, 9) jeweils eine Wandlermodulkondensatorspannung bereitstellt, wobei die Schalteinheit (13) eingerichtet ist, abhängig von einem jeweiligen Schaltzustand der Schalteinheit (13) die Wandlermodulkondensatorspannung eines der Wandlermodulkondensatoren (8, 9) oder eine Summenspannung der in Reihe geschalteten Wandlermodulkondensatoren (8, 9) auf die Wandlermodulanschlüsse (11, 12) zu schalten,
wobei die Schalteinheit zwei Halbleiterschalter (2, 3) aufweist, die in Reihe geschaltet sind und eine Reihenschaltung bilden, wobei ein Mittelanschluss der Reihenschaltung den einen der Wandlermodulanschlüsse (11) bereitstellt und wobei ein Verbindungspunkt der Reihenschaltung mit den in Reihe geschalteten Wandlermodulkondensatoren den anderen der Wandlermodulanschlüsse bereitstellt,
**dadurch gekennzeichnet, dass** die Schalteinheit zwei weitere Halbleiterschalter (6, 7) aufweist, die jeweils mit einem ihrer Anschlüsse an einen wandlermodulanschlussfreien Verbindungspunkt (16) der Reihenschaltung angeschlossen sind und
wobei der andere Anschluss eines der beiden weiteren Halbleiterschalter (7) an einen wandlermodulanschlussfreien Verbindungspunkt der in Reihe geschalteten Wandlermodulkondensatoren angeschlossen ist und der andere Anschluss des anderen der beiden weiteren Halbleiterschalter (6) an einen durch die in Reihe geschalteten Wandlermodulkondensatoren gebildeten Mittelanschluss (18) angeschlossen ist.

3. Wandlermodul nach Anspruch 1, **dadurch gekennzeichnet, dass** die Schalteinheit (13) eingerichtet ist, abhängig von einem jeweiligen Schaltzustand der Schalteinheit (13) eine Polarität der auf die Wandlermodulanschlüsse (11, 12) geschalteten Spannung zu wechseln.

4. Wandlermodul nach einem der vorhergehenden Ansprüche, **dadurch gekennzeichnet, dass** die Schalteinheit (13) eingerichtet ist, abhängig von einem jeweiligen Schaltzustand der Schalteinheit (13) die Wandlermodulanschlüsse (11, 12) elektrisch kurzzuschließen.

5. Mehrpegelenergiewandler (10) zum Wandeln von elektrischer Energie, mit einem Anschluss (19) zum Zuführen von zu wandelnder elektrischer Energie und einem anderen Anschluss (20) zum Abgeben der gewandelten elektrischen Energie, wobei der Mehrpegelenergiewandler (10) eine Wandlerschaltung (21) aufweist, die an einem ersten der beiden der Anschlüsse (19) des Mehrpegelenergiewandlers (10) angeschlossen ist und die mehrere in Reihe geschaltete Wandlermodule (1) umfasst und die einen mit dem zweiten der Anschlüsse gekoppelten Mittelanschluss (22) bereitstellt, wobei die Wandlermodule (1) der Wandlerschaltung (21) zum Steuern an eine Steuereinheit angeschlossen sind, welche die Wandlermodule (1) steuert, um die elektrische Energie zu wandeln, **dadurch gekennzeichnet,** **dass** die Wandlermodule (1) nach einem der vorhergehenden Ansprüche ausgebildet sind.

6. Verfahren zum Betreiben eines Mehrpegelenergiewandlers (10) zum Wandeln von elektrischer Energie mittels einer Wandlerschaltung (21), wobei an einem Anschluss (19) zu wandelnde elektrische Energie zugeführt und an einem anderen Anschluss (20) die gewandelte elektrische Energie abgegeben wird, wobei die Wandlerschaltung (21) an einem ersten der beiden der Anschlüsse (19) des Mehrpegelenergiewandlers (10) angeschlossen ist und mehrere in Reihe geschaltete Wandlermodule (1) umfasst und einen mit dem zweiten der Anschlüsse gekoppelten Mittelanschluss (22) bereitstellt, wobei die Wandlermodule (1) der Wandlerschaltung (21) mittels einer Steuereinheit gesteuert werden, um die elektrische Energie zu wandeln, wobei die Wandlerschaltung (21) Wandlermodule (1) nach einem der Ansprüche 1 bis 4 aufweist, die nach einem Betriebsverfahren betrieben werden, bei dem mittels der Steuereinheit über einen Steueranschluss Schaltzustände einer zwei Wandlermodulanschlüsse (11, 12) des Wandlermoduls (1) und den Steueranschluss bereitstellenden Schalteinheit (13) gesteuert werden, wobei durch zwei in Reihe geschaltete und an die Schalteinheit (13) angeschlossene Wandlermodulkondensatoren (8, 9) jeweils eine Wandlermodulkondensatorspannung bereitgestellt wird, wobei mittels der Schalteinheit (13) abhängig von einem jeweiligen Schaltzustand der Schalteinheit (13) die Wandlermodulkondensatorspannung eines der Wandlermodulkondensatoren (8, 9) oder eine Summenspannung der in Reihe geschalteten Wandlermodulkondensatoren (8, 9) auf die Wandlermodulanschlüsse (11, 12) geschaltet wird und wobei in einer Wandlermodulschaltung (21) des Mehrpegelenergiewandlers (10) das Wandlermodul (1) ermittelt wird, bei dem eine Spannungsdifferenz der in Reihe geschalteten Wandlermodulkondensatoren (8, 9) maximal oder minimal ist.

7. Verfahren nach Anspruch 6, **dadurch gekennzeichnet, dass** bei Bereitstellen einer elektrischen Spannung durch die Wandlerschaltung (21), die ein Aktivieren einer ungeraden Anzahl von Wandlermodulkondensatoren (8, 9) von Wandlermodulen (1) der Wandlermodulschaltung (21) erfordert, abhängig davon, ob ein Aufladen oder Entladen der Wandlermodulkondensatoren (8, 9) erfolgt, das Wandlermodul (1) mit der maximalen oder minimalen Spannungsdifferenz zum Aktivieren eines einzelnen seiner Wandlermodulkondensatoren (8, 9) ausgewählt wird.

8. Verfahren nach Anspruch 7, **dadurch gekennzeichnet, dass** bei den anderen Wandlermodulen (1) der Wandlerschaltung (21) entweder beide Wandlermodulkondensatoren (8, 9) aktiviert werden oder keiner der Wandlermodulkondensatoren (8, 9) aktiviert wird.

9. Verfahren nach einem der Ansprüche 6 bis 8, **dadurch gekennzeichnet, dass** Wandlermodule (1) der Wandlerschaltung (21) ermittelt werden, deren Betrag der Spannungsdifferenz einen vorgegebenen Vergleichswert überschreitet.

10. Verfahren nach Anspruch 9, **dadurch gekennzeichnet, dass** abhängig von der durch die Wandlerschaltung (21) bereitzustellenden elektrischen Spannung, mehrere Wandlermodule (1) ausgewählt werden, bei denen lediglich einer der beiden Wandlermodulkondensatoren (8, 9) aktiviert wird.

11. Verfahren nach einem der Ansprüche 7 bis 10, **dadurch gekennzeichnet, dass** bei den ausgewählten Wandlermodulen (1) jeweils der Wandlermodulkondensator (8, 9) aktiviert wird, sodass im folgenden bestimmungsgemäßen Betrieb des Mehrpegelenergiewandlers (10) der Betrag der Spannungsdifferenz reduziert wird.

**12.** Verfahren nach einem der Ansprüche 6 bis 11, **dadurch gekennzeichnet, dass** wenigstens eines der Wandlermodule (1) mit einem im Wandlermodul (1) zirkulierenden elektrischen Strom beaufschlagt wird, der auf einer Harmonischen eines Wandlermodulstromes der zweiten Ordnung basiert.

**Claims**

**1.** Converter module (1) for a multi-level energy converter (10) having two converter module connections (11, 12), a switching unit (13) and a control connection for the control of switching states of the switching unit (13), wherein the switching unit (13) provides the two converter module connections (11, 12) of the converter module (1) and the control connection, comprising two series-connected converter module capacitors (8, 9), which are connected to the switching unit (13), wherein each of the converter module capacitors (8, 9) respectively delivers a converter module capacitor voltage, wherein the switching unit (13) is configured to switch the converter module capacitor voltage of one of the converter module capacitors (8, 9), or a summed voltage of the series-connected converter module capacitors (8, 9), to the converter module connections (11, 12), according to the respective switching state of the switching unit (13), wherein the switching unit (13) has four semiconductor switches (2, 3, 4, 5), two of which are connected in series in each case to form a series circuit (14, 15), wherein the two series circuits (14, 15) are connected in parallel and, in each case, a center terminal of one of the series circuits (14, 15) constitutes one of the converter module connections (11, 12) respectively,
**characterized in that** the switching unit (13) has two further semiconductor switches (6, 7), each of which is connected on one of its terminals to one connection point (16) of the two series circuits (14, 15), wherein the other connection point of the two series circuits (14, 15) is connected to one end of the series-connected converter module capacitors (8, 9), wherein the other terminal of one of the two further semiconductor switches (7) is connected to the other end (17) of the series-connected converter module capacitors (8, 9), and the other terminal of the other of the two further semiconductor switches (6) is connected to a center terminal (18) constituted by the series-connected converter module capacitors (8, 9).

**2.** Converter module (1) for a multi-level energy converter (10) having two converter module connections (11, 12), a switching unit (13) and a control connection for the control of switching states of the switching unit (13), wherein the switching unit (13) provides the two converter module connections (11, 12) of the converter module (1) and the control connection, comprising two series-connected converter module capacitors (8, 9), which are connected to the switching unit (13), wherein each of the converter module capacitors (8, 9) respectively delivers a converter module capacitor voltage, wherein the switching unit (13) is configured to switch the converter module capacitor voltage of one of the converter module capacitors (8, 9), or a summed voltage of the series-connected converter module capacitors (8, 9), to the converter module connections (11, 12), according to the respective switching state of the switching unit (13), wherein the switching unit has two semiconductor switches (2, 3), which are connected in series to form a series circuit, wherein a center terminal of the series circuit constitutes one of the converter module connections (11), and wherein a connection point of the series circuit with the series-connected converter module capacitors constitutes the other of the converter module connections,
**characterized in that** the switching unit has two further semiconductor switches (6, 7) which, on one of their terminals respectively, are connected to a converter module connection-free connection point (16) of the series circuit, and wherein the other terminal of one of the two further semiconductor switches (7) is connected to a converter module connection-free connection point of the series-connected converter module capacitors, and the other terminal of the other of the two further semiconductor switches (6) is connected to a center terminal (18) constituted by the series-connected converter module capacitors.

**3.** Converter module according to Claim 1, **characterized in** the switching unit (13) is configured, according to the respective switching state of the switching unit (13), to alternate the polarity of the voltage switched to the converter module connections (11, 12).

**4.** Converter module according to one of the preceding claims, **characterized in that** the switching unit (13) is configured, according to a respective switching state of the switching unit (13), to electrically short-circuit the converter module connections (11, 12).

**5.** Multi-level energy converter (10) for the conversion of electrical energy, having one connection (19) for the infeed of electrical energy to be converted and another connection (20) for the output of the converted electrical energy, wherein the multi-level energy converter (10) has a converter circuit (21) which is connected to a first of the two connections (19) of the multi-level energy converter (10) and comprises a plurality of series-connected converter modules (1), and incorporates a center terminal (22) which is coupled to the second of the connections, wherein the converter modules (1) of the converter circuit (21), for the execution of control, are connected to a control unit, which controls the converter modules (1) in order to convert electrical energy,
**characterized in that** the converter modules (1) are configured according to one of the preceding claims.

6. Method for operating a multi-level energy converter (10) for the conversion of electrical energy by means of a converter circuit (21), wherein electrical energy to be converted is fed to one connection (19), and converted electrical energy is delivered at another connection (20), wherein the converter circuit (21) is connected to a first of the two connections (19) of the multi-level energy converter (10) and comprises a plurality of series-connected converter modules (1), and incorporates a center terminal (22) which is coupled to the second of the connections, wherein the converter modules (1) of the converter circuit (21) are controlled by means of a control unit, in order to convert electrical energy,
wherein the converter circuit (21) has converter modules (1) according to one of Claims 1 to 4, which are operated by an operating method wherein, by means of the control unit and via a control connection, the switching states of one of two converter module connections (11, 12) of the converter module (1) and the switching unit (13) incorporating the control connection are controlled,
wherein two series-connected converter module capacitors (8, 9), which are connected to the switching unit (13), respectively deliver a converter module capacitor voltage, wherein the switching unit (13) is configured to switch the converter module capacitor voltage of one of the converter module capacitors (8, 9), or a summed voltage of the series-connected converter module capacitors (8, 9), to the converter module connections (11, 12), according to the respective switching state of the switching unit (13), and wherein, in a converter module circuit (21) of the multi-level energy converter (10), the converter module (1) is identified in which the maximum or minimum voltage difference on the series-connected converter module capacitors (8, 9) is present.

7. Method according to Claim 6, **characterized in that**, for the delivery of an electrical voltage by the converter circuit (21) which requires the activation of an uneven number of converter module capacitors (8, 9) of the converter modules (1) on the converter module circuit (21), depending upon whether the charging or discharging of the converter module capacitors (8, 9) is in progress, the converter module (1) with the maximum or minimum voltage difference is selected for the activation of one of its converter module capacitors (8, 9).

8. Method according to Claim 7, **characterized in that**, in the other converter modules (1) of the converter circuit (21), either both converter module capacitors (8, 9) are activated, or none of the converter module capacitors (8, 9) is activated.

9. Method according to one of Claims 6 to 8, **characterized in that** converter modules (1) of the converter circuit (21) are identified, in which the magnitude of the voltage difference exceeds a predetermined comparison value.

10. Method according to Claim 9, **characterized in that**, depending upon the electrical voltage to be delivered by the converter circuit (21), a plurality of converter modules (1) can be selected, in which only one of the two converter module capacitors (8, 9) is activated.

11. Method according to one of Claims 7 to 10, **characterized in that**, in the selected converter modules (1), the respective converter module capacitor (8, 9) is activated such that, in the subsequent regulation duty of the multi-level energy converter (10), the magnitude of the voltage difference is reduced.

12. Method according to one of Claims 6 to 11, **characterized in that** at least one of the converter modules (1) is supplied with an electric current flowing in the converter module (1), which is based upon a second-order harmonic of a converter module current.

**Revendications**

1. Module (1) de convertisseur pour un convertisseur (10) d'énergie à plusieurs niveaux ayant deux bornes (11, 12) de module de convertisseur, une unité (13) de commutation et une borne de commande pour commander des états de commutation de l'unité (13) de commutation, dans lequel l'unité (13) de commutation procure les deux bornes (11, 12) du module (1) de convertisseur et la borne de commande, comprenant deux condensateurs (8, 9) de module de convertisseur montés en série et raccordés à l'unité (13) de commutation, dans lequel chacun des condensateurs (8, 9) de module de convertisseur procure chacun une tension de condensateur de module de convertisseur, l'unité (13) de commutation étant conçue pour, en fonction d'un état de commutation de l'unité (13) de commutation, appliquer la tension de l'un des condensateurs (8, 9) de module de convertisseur ou une tension somme des condensateurs (8, 9) de module de convertisseur montés en série aux bornes (11, 12) du module de convertisseur,

l'unité (13) de commutation ayant quatre interrupteurs (2, 3, 4, 5) à semi-conducteur, dont respectivement deux sont montés en série et forment un circuit (14, 15) série, les deux circuits (14, 15) série étant montés en parallèle et respectivement une borne médiane de l'un des circuits (14, 15) série procure respectivement l'une des bornes (11, 12) du module de convertisseur,

**caractérisé en ce que** l'unité (13) de commutation a deux autres interrupteurs (6, 7) à semi-conducteur, qui sont raccordés chacun par l'une de leurs bornes à un point (16) de liaison des deux circuits (14, 15) série, l'autre point de liaison des deux circuits (14, 15) série étant raccordé à une extrémité des condensateurs (8, 9) de module de convertisseur montés en série, l'autre borne de l'un des deux autres interrupteurs (7) à semi-conducteur étant raccordée à l'autre extrémité des condensateurs (8, 9) de module de convertisseur montés en série et l'autre borne de l'autre des deux autres interrupteurs (6) à semi-conducteur étant raccordée à une borne (18) médiane formée par les condensateurs (8, 9) de module de convertisseur montés en série.

2. Module (1) de convertisseur pour un convertisseur (10) d'énergie à plusieurs niveaux ayant deux bornes (11, 12) de module de convertisseur, une unité (13) de commutation et une borne de commande pour commander des états de commutation de l'unité (13) de commutation, dans lequel l'unité (13) de commutation procure les deux bornes (11, 12) du module (1) de convertisseur et la borne de commande, comprenant deux condensateurs (8, 9) de module de convertisseur montés en série et raccordés à l'unité (13) de commutation, dans lequel chacun des condensateurs (8, 9) de module de convertisseur procure chacun une tension de condensateur de module de convertisseur, l'unité (13) de commutation étant conçue pour, en fonction d'un état de commutation de l'unité (13) de commutation, appliquer la tension de l'un des condensateurs (8, 9) de module de convertisseur ou une tension somme des condensateurs (8, 9) de module de convertisseur montés en série aux bornes (11, 12) du module de convertisseur,

dans lequel l'unité de commutation a deux interrupteurs (2, 3) à semi-conducteur, qui sont montés en série et forment un circuit série,

dans lequel une borne médiane du circuit série procure l'une des bornes (11) du module du convertisseur et dans lequel un point de liaison du circuit série avec les condensateurs du module de convertisseur montés en série procure l'autre des bornes du module de convertisseur,

**caractérisé en ce que** l'unité de commutation a deux autres interrupteurs (6, 7) à semi-conducteurs, qui sont raccordés chacun par l'une de leurs bornes à un point (16) de liaison sans borne de module de convertisseur du circuit série et

dans lequel l'autre borne de l'un des deux autres interrupteurs (7) à semi-conducteur est raccordée à un point de liaison sans borne de module de convertisseur des condensateurs de module de convertisseur montés en série et l'autre borne de l'autre des deux autres interrupteurs (6) @ semi-conducteur est raccordée à une borne (18) médiane formée par les condensateurs de module de convertisseur montés en série.

3. Module de convertisseur suivant la revendication 1, **caractérisé en ce que** l'unité (13) de commutation est conçue pour, en fonction d'un état de commutation de l'unité (13) de commutation, changer une polarité de la tension appliquée aux bornes (11, 12) de module de convertisseur.

4. Module de convertisseur suivant l'une des revendications précédentes, **caractérisé en ce que** l'unité (13) de commutation est conçue pour, en fonction d'un état de commutation de l'unité (13) de commutation, court-circuiter électriquement les bornes (11, 12) du module de convertisseur.

5. Convertisseur (10) d'énergie à plusieurs niveaux pour convertir de l'énergie électrique, comprenant une borne (19) pour apporter de l'énergie électrique à convertir et une autre borne (20) pour céder l'énergie électrique convertie, dans lequel le convertisseur (10) d'énergie à plusieurs niveaux a un circuit (21) de convertisseur, qui est raccordé à une première des deux bornes (19) du convertisseur (10) d'énergie à plusieurs niveaux et qui comprend plusieurs modules (1) de convertisseur montés en série et qui procure une borne (22) médiane reliée à la deuxième des bornes, les modules (1) de convertisseur du circuit (21) de convertisseur étant, pour la commande, raccordés à une unité de commande, qui commande les modules (1) de convertisseur afin de convertir l'énergie électrique,

**caractérisé en ce que** les modules (1) de convertisseur sont constitués suivant l'une des revendications précédentes.

6. Procédé pour faire fonctionner un convertisseur (10) d'énergie à plusieurs niveaux pour transformer de l'énergie électrique au moyen d'un circuit (21) de convertisseur, dans lequel on apporte à une borne (19) de l'énergie électrique à convertir et on cède à une autre borne (20) l'énergie électrique convertie, le circuit (21) de convertisseur étant raccordé à une première des deux bornes (19) du convertisseur (10) d'énergie à plusieurs niveaux et comprenant plusieurs modules (1) de convertisseur montés en série et procurant une borne (22) médiane reliée à la deuxième des bornes, dans lequel on commande les modules (1) de convertisseur du circuit (21) de convertisseur au moyen d'une unité de commande afin de convertir l'énergie électrique,

dans lequel le circuit (21) de convertisseur a des modules (1) de convertisseur suivant l'une des revendications 1 à 4, que l'on fait fonctionner suivant un procédé de fonctionnement, dans lequel, au moyen de l'unité de commande, on commande, par l'intermédiaire d'une borne de commande, des états de commutation d'une unité (13) de commutation procurant deux bornes (11, 12) du module (1) de convertisseur et la borne de commande,

dans lequel, par deux condensateurs (8, 9) de module de convertisseur montés en série et raccordés à l'unité (13) de commutation, on procure respectivement une tension de condensateur de module de convertisseur, dans lequel, au moyen de l'unité (13) de commutation, on applique, en fonction d'un état de commutation de l'unité (13) de commutation, la tension de condensateur de module de convertisseur de l'un des condensateurs (8, 9) de module de convertisseur ou une tension somme des condensateurs (8, 9) de module de convertisseur montés en série aux bornes (11, 12) du module de convertisseur et dans lequel, dans un circuit (21) de module de convertisseur du convertisseur (10) d'énergie à plusieurs niveaux, on détermine le module (1) de convertisseur, pour lequel une différence de tension des condensateurs (8, 9) de module de convertisseur montés en série est maximum ou minimum.

7. Procédé suivant la revendication 6, **caractérisé en ce que**, lorsque l'on procure une tension électrique par le circuit (21) de convertisseur, qui exige une activation d'un nombre impair de condensateurs (8, 9) de module (1) de convertisseur du circuit (21) de module de convertisseur, en fonction du point de savoir s'il s'effectue une charge ou une décharge des condensateurs (8, 9) de module de convertisseur, on choisit le module (1) de convertisseur ayant la différence de tension maximum ou minimum pour activer l'un de ces condensateurs (8, 9) de module de convertisseur.

8. Procédé suivant la revendication 7, **caractérisé en ce que**, pour les autres modules (1) de convertisseur du circuit (21) de convertisseur, on active, soit les deux condensateurs (8, 9) du module de convertisseur, soit aucun des condensateurs (8, 9) de module de convertisseur.

9. Procédé suivant l'une des revendications 6 à 8, **caractérisé en ce que** l'on détermine des modules (1) de convertisseur du circuit (21) de convertisseur, dont la valeur de la différence de tension est basse, une valeur de comparaison donnée à l'avance.

10. Procédé suivant la revendication 9, **caractérisé en ce que**, en fonction de la tension électrique procurée par le circuit (21) de convertisseur, on choisit plusieurs modules (1) de convertisseur, pour lesquels on active seulement l'un des deux condensateurs (8, 9) de module de convertisseur.

11. Procédé suivant l'une des revendications 7 à 10, **caractérisé en ce que**, pour les modules (1) de convertisseur choisis, on active respectivement le condensateur (8, 9) de module de convertisseur, de manière à réduire, dans le fonctionnement venant ensuite conforme aux prescriptions du convertisseur (10) d'énergie à plusieurs niveaux, la valeur de la différence de tension.

12. Procédé suivant l'une des revendications 6 à 10, **caractérisé en ce que** l'on alimente au moins l'un des modules (1) de convertisseur en un courant électrique, qui circule dans le module (1) de convertisseur et qui repose sur un harmonique d'un courant de module de convertisseur du deuxième ordre.

FIG 1

FIG 2

$V_{AB} = 2V$

FIG 3

$V_{AB} = V$

EP 3 245 727 B1

18

FIG 4

FIG 5

FIG 6

$V_{AB}=0$

$V_{AB}=-V$

$V_{AB}=-2V$

EP 3 245 727 B1

FIG 7

FIG 8

FIG 9

FIG 10

FIG 11

EP 3 245 727 B1

## FIG 12

## FIG 13

FIG 14

FIG 15

FIG 16

FIG 17

## FIG 18

## FIG 19

FIG 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- New 3-level Submodules for a Modular Multilevel Converter based HVDC System with Advanced Features. **SAHOO A.K. ; OTERO-DE LEON R. ; CHANDRASEKAN V. ; MOHAN N.** 39th Annual Conference of the IEEE Industrial Electronics Society. IEEE, 2013

- **LESNICAR, A. ; MARQUARDT, R.** An innovative modular multi-level converter topology for wide power range. *IEEE Power Tech Conference,* Juni 2003